# EUROPEAN PATENT APPLICATION

(11) **EP 4 019 586 A2**
(43) Date of publication of application: **29.06.2022**
(21) Application number: 21215676.4
(22) Date of filing: 17.12.2021
(51) Int. Cl.: C08L 33/10

(54) **HIGH TEMPERATURE, OIL-RESISTANT THERMOPLASTIC VULCANIZATES**

(30) Priority: 21.12.2020 US 202063128367 P
(71) Applicant: Parker Hannifin Corp., Cleveland, OH 44124-4141 (US)
(72) Inventor: ABRAHAM, Tonson, Avon, OH 44011 (US); JINDAL, Aditya, Cuyahoga Falls, OH 44221 (US); MALLAMACI, Michael P, North Canton, OH 44720 (US)
(74) Representative: Neilson, Martin Mark

(57) **Abstract**

Disclosed are thermoplastic vulcanizates comprising a plastic phase and a rubber phase and process for preparing such thermoplastic vulcanizates, wherein the plastic phase comprises a thermoplastic polymer and the rubber phase comprises an acrylate or ethylene acrylate rubber.

## Description

### Cross-reference to related applications

This application claims priority from U.S. Provisional Application No. 63/128,367, filed December 21, 2020, the disclosure of which is hereby incorporated by reference in its entirety.

### Field of the Invention

The current disclosure relates to compositions and methods for the preparation of thermoplastic vulcanizates (TPVs) that are resistant to hydrocarbon oils by dynamic vulcanization of acrylate rubber (ACM) or ethylene-acrylate rubber (AEM) in high melting point, semi-crystalline thermoplastic materials, namely, polyesters and polyamides. The compositions disclosed herein can be readily produced and fabricated using commercially suitable plastics compounding and fabricating equipment to yield molded (by injection, extrusion or blow molding) parts with excellent surface appearance. Furthermore, addition-type curing agents that advantageously cure the rubber without the evolution of volatiles, and without degradation of the plastic phase, and that facilitate rubber and plastic compatibilization, are disclosed.

### Background of the Invention

The commercialization of thermoplastic elastomers by dynamic vulcanization, although established over four decades ago, is still typified with the use of only one plastic and rubber melt blend, namely isotactic polypropylene (PP) and ethylene/propylene/diene (EPDM) rubber. In the commercial dynamic vulcanization process, high molecular weight (MW) PP is melt-blended with high MW EPDM, under intense shearing conditions provided by a corotating rotating twin screw (TSE) extruder. The EPDM generally used is extended with paraffinic oil, to allow ready process-ability of this rubber during its manufacture. Additional oil is added to the intimately melt-mixed PP/EPDM, kept at about 200° C, in the dynamic vulcanization process. Generally, for soft compositions (Shore A ≤90) the PP/EPDM melt blend is composed of a larger volume oil-swollen rubber phase and a lower volume solution of PP in oil. The high MW EPDM polymer chains are entangled. Although EPDM is soluble in paraffinic oil, and although the total mass of oil in the system may be comparable to the mass of the EPDM present, the oil does not completely disentangle the rubber. The oil partitions between the PP and rubber phase in proportion to the phase melt volume which is also close to the mass ratio of the oil-free components. Subsequently, typically, a resole type of phenolic resin rubber curative is added to the said met blend, under continued intense mixing conditions. The rubber then is converted to a thermoset, without affecting the plastic phase. Under the high temperature and intense shearing conditions (shear rates can vary from 1000 s⁻¹to 10,000 s⁻¹ during TPV preparation), the EPDM thermoset disintegrates into fine, oil-swollen, crosslinked rubber particles that are then contained in a solution of PP in oil. Although in the initial melt blend, prior to dynamic vulcanization, the oil-swollen EPDM (the larger phase volume) is the continuous phase, and the solution of PP in oil may be a discreet or co-continuous phase, after dynamic vulcanization a phase inversion occurs to yield a continuous phase of a solution of PP in oil that is filled with crosslinked, oil-swollen, particulate EPDM rubber. On cooling, PP crystallizes from oil, nucleated by the rubber particles. The oil is rejected from the PP crystallites further swells the rubber particles, and some of the oil pools in the amorphous PP phase. The room temperature morphology of the solid TPV is best described as a continuous matrix of PP, filled with oil-swollen, crosslinked, distorted spherical rubber particles of 1µm to 5µm in diameter. Sub-micron pools of oil are also present in the amorphous portion of the PP phase.

Thus, there is a need for hydrocarbon oil-resistant TPVs for automotive applications such as hoses and seals.

In the design of oil-resistant TPVs, a polar plastic, together with a broad use temperature (-40°C to 150°C) elastomer combination has to be chosen. Commercially available semi-crystalline polar plastic materials such as polyesters and nylons are potential candidates for the application. Note that a semi-crystalline plastic is preferable over a completely amorphous plastic. For example, poly (butylene terephthalate) (PBT) has a melting point of about 225°C, and a glass transition temperature (T_{g}) of about 50°C. The melting point of PBT and its creep properties will determine the upper use temperature of a PBT containing TPV. A material increases in flow gradually, when heated beyond the T_{g}. A major factor controlling the upper use temperature of the TPV is the PBT melting point. On PBT melting during TPV processing, the temperature is already 175°C above the T_{g}, and hence the plastic melt flows readily, which is important in TPV melt viscosity control, as the viscous drag of the plastic melt over the crosslinked rubber particles can result in a poorly process-able product. If the plastic were completely amorphous, the use temperature would have to be below the plastic T_{g}. Even if a plastic with a T_{g} of 175°C were chosen, the flow properties of this plastic even at 275°C would probably be unacceptable in the application. Furthermore, thermal, thermo-oxidative, and shear degradation of the TPV melt at the high temperature would be unacceptable.

High use-temperature polar rubbers that are resistant to hydrocarbon oils include acrylate rubber (ACM) and ethylene-acrylate rubber (AEM). Generally, AEM offers better physical properties than ACM as more of the molecular weight in AEM is concentrated in the carbon chain backbone than pendant to it.

However, oil-resistant TPVs have the following major drawbacks to achieving desirable mechanical properties and processability, when compared with PP/EPDM based TPVs.

Polar plastics and polar rubbers are much less compatible than PP and EPDM. Hence a larger rubber particle size on dynamic vulcanization can be expected in the former case, leading to poorer physical properties. No "mechanical lock" (observed in the case of PP/EPDM TPVs) between the plastic phase and particulate rubber can be expected, due to poorer plastic and rubber phase compatibility, and due to much lower materials molecular weight. Hence compatibilizer formation between the rubber and plastic is necessary for low rubber particle size (improved TPV physical properties) and processability (by limiting rubber particle agglomeration under lower shear rate processing conditions versus the much higher shear rate used during TPV reactive extrusion).

ACM and AEM based TPVs with Nylons or Polyesters as the plastic phase, with peroxide as the rubber curative, are well documented in the literature. In certain such products, peroxide can produce volatile reaction products; peroxide can also react with the plastic phase and can result in compromised physical TPV properties.

Published US patent application US2004/0115450 A1 to Bendler et al. discloses the preparation of peroxide-cured Hytrel 5526/ethylene-methyl acrylate di-polymer TPVs using a twin-screw extruder.

US Patent No. 6,329,463 and EP 0922730 disclose oxazoline cured TPV compositions in which an acrylate or an ethylene-acrylate rubber is dynamically vulcanized in a polyester, polycarbonate, or polyphenylene oxide plastic.

Thus, there is a need for high temperature, oil-resistant TPVs suitable for use at temperatures of -40°C to 150°C that avoid the compositional, manufacturing, and use limitations discussed above.

### Summary of the Invention

Disclosed are compositions and processes for the preparation of readily processable, high-temperature, oil-resistant TPVs by the dynamic vulcanization of acrylate (ACM) or ethylene-acrylate rubber (AEM) in high melting point nylons, polyesters, or segmented polyester block copolymers (COPEs), using, for example, 2,2'-(1,3-phenylene)-bis-(2-oxazoline) (1,3-PBO), or 2,2'-(2,6-pyridylene)-bis-(2-oxazoline) (2,6-PyBO) as rubber curative.

The use of oxazoline curatives does not degrade the TPV plastic phase, and allows selective addition crosslinking of the rubber, thereby avoiding product process-ability problems that can be caused by volatile by-products from the curing reaction being trapped in the TPV melt. Furthermore, the curative links the plastic molecules to the rubber (compatibilizer formation) via the carboxylic acid end groups of the plastic with the carboxylic acid, chlorine, or anhydride moieties that are present on the rubber backbone. Compatibilizer formation enhances TPV physical properties. plasticizer is preferably miscible with the plastic phase only, although plasticizers that are miscible with neither or with the rubber and/or plastic phase are also acceptable.

Polar plastics and polar rubbers used in the preparation of high-temperature, oil-resistant TPVs, have lower MW in comparison with PP and EPDM. Hence, during preparation of polar TPVs by reactive extrusion, precautions must be taken in order to prevent polymer degradation by thermal, thermo-oxidative, and mechanical processes. Hence tight process temperature control and achieving excellent polymer melt blending using minimal shearing of the polymer melt blend is critical. The TPVs of this invention can be prepared using corotating or counter rotating twin screw extruders (TSEs), with elements that allow excellent polymer melt blending at low shear rate conditions (<3000 s⁻¹). A particularly suitable single screw extruder for preparation of the TPVs of this invention is the Buss Kneader. Here, a reciprocating single screw, where a screw shaft consisting of different elements (kneading, conveying, etc.) shears the polymer melt blend by the action of the screw elements on fixed (but adjustable) pins on the extruder barrel. Thus, intense polymer melt blending can be achieved at a low shear rate (<1100 s⁻¹), resulting in excellent polymer melt temperature control. Owing to the low shear rate profile of the Buss when compared to TSEs, the former machine is much less torque limited than the latter.

In a broad aspect, this disclosure provides thermoplastic vulcanizate comprising a plastic phase and a rubber phase, wherein
(a) the plastic phase comprises from about 40 parts to about 95 parts, based on 100 parts of total rubber and plastic, of a plastic having a melting point of from about 160°C to about 260°C and which is a semi-crystalline engineering polyester or a semi-crystalline copolyester elastomer;
(b) the rubber phase comprises from about 60 parts to about 5 parts, based on 100 parts of total rubber and plastic, of a rubber which is a carboxylic acid cure site and/or chlorine cure site functional acrylate rubber, an anhydride cure site functional acrylate rubber, or a carboxylic acid cure site or anhydride cure site functional ethylene-acrylate rubber; and
(c) a plasticizer for one or both of the plastic or the rubber;
wherein crosslinks exist between reactive groups in the rubber.

The crosslinks are the result of a reaction between 1 part to about 15 parts, based on 100 parts of total rubber and plastic, of an addition type curing agent and reactive groups in the rubber.

In another aspect, the disclosure provides thermoplastic vulcanizates prepared by dynamically crosslinking a melt blend with an addition type curing agent, wherein the melt blend comprises:
(a) a plastic phase comprising from about 40 parts to about 95 parts, based on 100 parts of total rubber and plastic, of a plastic having a melting point of from about 160°C to about 260°C and which is a semi-crystalline engineering polyester or a semi-crystalline copolyester elastomer;
(b) a rubber phase comprising from about 60 parts to about 5 parts, based on 100 parts of total rubber and plastic, of a rubber which is a carboxylic acid cure site and/or chlorine cure site functional acrylate rubber, an anhydride cure site functional acrylate rubber, or a carboxylic acid cure site or anhydride cure site functional ethylene-acrylate rubber; and
(c) a plasticizer for one or both of the plastic or the rubber; and
   wherein the amount of the addition type curing agent is from about 1 part to about 15 parts, based on 100 parts of total rubber and plastic.

In another aspect, this disclosure provides thermoplastic elastomers comprising a plastic phase and a rubber phase, wherein
(a) the plastic phase comprises from about 40 parts to about 95 parts, based on 100 parts of total rubber and plastic, of a plastic having a melting point of from about 160°C to about 260°C and which is a semi-crystalline engineering polyester or a semi-crystalline copolyester elastomer;
(b) the rubber phase comprises from about 60 parts to about 5 parts, based on 100 parts of total rubber and plastic, of a rubber which is a carboxylic acid cure site and/or chlorine cure site functional acrylate rubber, an anhydride cure site functional acrylate rubber, or a carboxylic acid cure site or anhydride cure site functional ethylene-acrylate rubber; and
(c) an optional plasticizer for one or both of the plastic or the rubber.

The thermoplastic elastomers are typically pre-vulcanized compositions and can be used as intermediates in the preparation of the disclosed fully vulcanized TPV products. These elastomers are pre-crosslinked compositions and are substantially free of cross-linked rubber material. The final thermoplastic vulcanizates of this disclosure can be made directly from the thermoplastic elastomers by mixing the elastomer composition with an addition-type curing agent and subjecting the resulting mixture to dynamic vulcanization, i.e., conditions of shear at a temperature above the melting point of the polyester component.

In a related aspect, this disclosure provides thermoplastic elastomers comprising a plastic phase and a rubber phase as defined above as well as an addition-type curing agent.

In another aspect, the disclosure provides an ethylene-acrylate rubber which is
an ethylene-acrylate rubber consisting of copolymerized ethylene and methyl acrylate;
an ethylene-acrylate rubber consisting of copolymerized ethylene, methyl acrylate, and butyl acrylate; or
an ethylene-acrylate rubber consisting of copolymerized ethylene, and one or monomers selected from methyl acrylate, ethyl acrylate, butyl acrylate, methoxyethyl (meth)acrylate or methoxypoly(ethylene glycol) (meth)acrylate;
wherein
each rubber has a maleic anhydride cure site content of from about 0.5 weight percent to about 5 weight percent, and
the anhydride cure sites have been converted to acid cure sites by a reaction between the rubber and an amino acid of the formula H₂N-R-CO₂H, where R is a linear or branched alkyl radical of 1 to 24 carbon atoms, or where R is alkyl, aromatic or an alkyl/aromatic combination.

### BRIEF DESCRIPTION OF THE FIGURES

Figure 1 is a diagram of the barrel setup in the TEM-26SS twin-screw extruder described and used in Example 1. The numbers refer to the barrels described in Example 1.
Figure 2 is a diagram of the barrel setup in the ZSK 26 twin-screw extruder described and used in Example 7. The numbers refer to the barrels described in Example 7.

### Detailed Description of the Invention

As used herein, the term thermoplastic vulcanizate (TPV) refers a thermoplastic elastomer produced via dynamic vulcanization of a blend of a rubber phase and a thermoplastic polymer in the presence of a vulcanizing system.

The acronym "ACM" used herein refers to acrylate rubber.

The acronym "AEM" used herein refers to ethylene-acrylate rubber.

As used herein, "rubber" refers to acrylate rubber and ethylene-acrylate rubber.

The terms semi-crystalline copolyester elastomer, segmented polyester block copolymer and COPE are used interchangeably.

As used herein, the term "dynamic vulcanization" means a vulcanization or curing process for a rubber contained in a thermoplastic vulcanizate composition, wherein the rubber is vulcanized under conditions of shear at a temperature above the melting point of the polyester component. The rubber is thus simultaneously cross-linked and typically dispersed as fine particles within the polyester matrix. Although particles are the typical morphology, other morphologies may also exist.

Thermoplastic vulcanizates typically have finely dispersed, micron-sized, crosslinked rubber particles distributed in a continuous thermoplastic matrix.

Unless otherwise specified, "parts" of a particular TPV component, e.g., plastic, rubber or curing agent, refers to parts by weight.

The disclosures of all patents and literature references identified herein are hereby incorporated by reference in their entirety.

In certain aspects, this disclosure provides thermoplastic vulcanizates wherein comprising a blend of
(a) a plastic phase comprising from about 90 parts to about 95 parts, based on 100 parts of total rubber and plastic, of a plastic having a melting point of from about 160°C to about 260°C and which is a semi-crystalline engineering polyester or a semi-crystalline copolyester elastomer; and
(b) a rubber phase comprising from about 10 parts to about 5 parts, based on 100 parts of total rubber and plastic, of a carboxylic acid cure site and/or chlorine cure site functional acrylate rubber, an anhydride cure site functional acrylate rubber, or a carboxylic acid cure site or anhydride cure site functional ethylene-acrylate rubber;
wherein crosslinks exist between reactive groups in the rubber.

In this aspect, the crosslinks are the result of a reaction between 1 part to about 15 parts, based on 100 parts of total rubber and plastic, of an addition type curing agent and reactive groups in the rubber.

In certain aspects, this disclosure provides thermoplastic vulcanizates prepared by dynamically crosslinking a melt blend with an addition type curing agent, wherein the melt blend comprises:
(a) a plastic phase comprising from about 90 parts to about 95 parts, based on 100 parts of total rubber and plastic, of a plastic having a melting point of from about 160°C to about 260°C and which is a semi-crystalline engineering polyester or a semi-crystalline copolyester elastomer; and
(b) a rubber phase comprising from about 10 parts to about 5 parts, based on 100 parts of total rubber and plastic, of a carboxylic acid cure site and/or chlorine cure site functional acrylate rubber, an anhydride cure site functional acrylate rubber, or a carboxylic acid cure site or anhydride cure site functional ethylene-acrylate rubber; and the amount of the addition type curing agent is from about 1 part to about 15 parts, based on 100 parts of total rubber and plastic.

In certain aspects, this disclosure provides thermoplastic vulcanizates comprising a blend of
(a) a plastic phase comprising from about 35 parts to about 95 parts, based on 100 parts of total rubber and plastic, of a semi-crystalline polyamide having a melting point of from about 160°C to about 260°C; and
(b) a rubber phase comprising from about 60 parts to about 5 parts, based on 100 parts of total rubber and plastic, of a carboxylic acid cure site and/or chlorine cure site functional acrylate rubber, an anhydride cure site functional acrylate rubber, or a carboxylic acid cure site or anhydride cure site functional ethylene-acrylate rubber;
wherein crosslinks exist between reactive groups in the rubber.

In certain aspects, this disclosure provides thermoplastic vulcanizates comprising a blend of
(a) a plastic phase comprising from about 35 parts to about 95 parts, based on 100 parts of total rubber and plastic, of a semi-crystalline polyamide having a melting point of from about 160°C to about 260°C;
(b) a rubber phase comprising from about 60 parts to about 5 parts, based on 100 parts of total rubber and plastic, of a carboxylic acid cure site and/or chlorine cure site functional acrylate rubber, an anhydride cure site functional acrylate rubber, or a carboxylic acid cure site or anhydride cure site functional ethylene-acrylate rubber; and
(c) up to about 35 parts, based on 100 parts of total rubber and plastic in the formulation, of a plasticizer for one or both of the plastic or rubber;
wherein crosslinks exist between reactive groups in the rubber.

In the two aspects described immediately above, the crosslinks are the result of a reaction between 1 part to about 15 parts, based on 100 parts of total rubber and plastic, of an addition type curing agent and reactive groups in the rubber.

In certain aspects, this disclosure provides thermoplastic vulcanizates prepared by dynamically crosslinking a melt blend with an addition type curing agent, wherein the melt blend comprises:
(a) a plastic phase comprising from about 35 parts to about 95 parts, based on 100 parts of total rubber and plastic, of a semi-crystalline polyamide having a melting point of from about 160°C to about 260⁰C; and
(b) a rubber phase comprising from about 60 parts to about 5 parts, based on 100 parts of total rubber and plastic, of a carboxylic acid cure site and/or chlorine cure site functional acrylate rubber, an anhydride cure site functional acrylate rubber, or a carboxylic acid cure site or anhydride cure site functional ethylene-acrylate rubber;
wherein the amount of the addition type curing agent is from about 1 part to about 15 parts, based on 100 parts of total rubber and plastic.

In certain aspects, this disclosure provides thermoplastic vulcanizates prepared by dynamically crosslinking a melt blend with an addition type curing agent, wherein the melt blend comprises:
(a) a plastic phase comprising from about 35 parts to about 95 parts, based on 100 parts of total rubber and plastic, of a semi-crystalline polyamide having a melting point of from about 160°C to about 260°C;
(b) a rubber phase comprising from about 60 parts to about 5 parts, based on 100 parts of total rubber and plastic, of a carboxylic acid cure site and/or chlorine cure site functional acrylate rubber, an anhydride cure site functional acrylate rubber, or a carboxylic acid cure site or anhydride cure site functional ethylene-acrylate rubber; and
(c) up to about 35 parts, based on 100 parts of total rubber and plastic in the formulation, of a plasticizer for one or both of the plastic or the rubber; and
wherein the amount of the addition type curing agent is from about 1 part to about 15 parts, based on 100 parts of total rubber and plastic.

As noted above, in certain aspects, this disclosure provides a modified ethylene-acrylate rubber which is
an ethylene-acrylate rubber consisting of copolymerized ethylene and methyl acrylate;
an ethylene-acrylate rubber consisting of copolymerized ethylene, methyl acrylate, and butyl acrylate; or
an ethylene-acrylate rubber consisting of copolymerized ethylene, and one or monomers selected from methyl acrylate, ethyl acrylate, butyl acrylate, methoxyethyl (meth)acrylate or methoxypoly(ethylene glycol) (meth)acrylate;
wherein
each rubber has a maleic anhydride cure site content of from about 0.5 weight percent to about 5 weight percent, and
the anhydride cure sites have been converted to acid cure sites by a reaction between the rubber and an amino acid of the formula H₂N-R-CO₂H, where R is a linear or branched alkyl radical of 1 to 24 carbon atoms, or where R is alkyl, aromatic or an alkyl/aromatic combination.

Particularly suitable amino acids for use in the modified ethylene-acrylate rubbers are 2-aminobenzoic acid, 3-aminobenzoic acid, 4-aminobenzoic acid, 6-aminohexanoic acid, and mixtures thereof.

Particularly suitable modified ethylene-acrylate rubbers as disclosed herein have a rubber glass transition temperature between about -30°C to about -20°C.

A representative modified ethylene-acrylate rubber as disclosed herein is a copolymerized ethylene, methyl acrylate, and butyl acrylate rubber having a rubber glass transition temperature between about -40°C to about -20°C.

### Thermoplastic Polymers

The thermoplastic polymers or plastics, i.e., nylons, polyesters, and COPEs, used herein preferably have melting points between about 160°C or 170°C and about 260°C. Preferred plastics for use herein include those having melting points between about 170°C and about 250°C or 260 °C. Other preferred plastics for use herein include those having melting points between about 180°C and about 250°C or 260 °C. Other preferred plastics for use herein include those having melting points between about 190°C and about 250°C or 260°C. Other preferred plastics for use herein include those having melting points between about 200°C and about 230 °C, or 240 °C, or 250°C or 260°C.

In certain aspects, the amount of plastic ranges from about 40 parts to 95 parts, and the amount of rubber ranges from about 60 parts to about 5 parts, based on 100 parts of plastic and rubber. In particular aspects, the amount of curing agent useful herein is from about 1 part to about 15 parts based on 100 parts of rubber.

Suitable amounts of plastic (thermoplastic polymer) based on 100 parts of plastic and rubber in the TPV formulations include about 40 parts, about 45 parts, about 50 parts, about 55 parts, about 60 parts, about 65 parts, about 70 parts, about 75 parts, about 80 parts, about 85 parts, about 90 parts, or about 95 parts.

Suitable amounts of rubber based on 100 parts of plastic and rubber in the TPV formulations include about 5 parts, about 10 parts, about 15 parts, about 20 parts, about 25 parts, about 30 parts, about 35 parts, about 40 parts, about 45 parts, about 50 parts, about 55 parts, or about 60 parts.

### Nylons

Suitable polyamides for use as the thermoplastic material in the plastic phase include semi-crystalline aliphatic polyamides (condensation polymers of aliphatic diamines with aliphatic diacids, or polymers obtained by the polymerization of an AB monomer such as caprolactam) or copolyamides thereof, having melting points between about 160°C or 170°C and about 260°C. Suitable polyamides have medium to high molecular weights, i.e., molecular weights sufficient to produce with relative viscosities between about 2 to about 4, as measured in 96 weight per cent sulfuric acid at a 1 % concentration (mass of Nylon in volume of sulfuric acid).

Particularly useful polyamides include polycondensation products of hexamethylenediamine and adipic acid (e.g., Nylon 6/6), hexamethylenediamine and 1,12-dodecanedioic acid (e.g., Nylon 6/12), and pentamethylene diamine and sebacic acid (e.g., Nylon 510). Other examples of suitable polyamide thermoplastic materials are poly(11-aminoundecanoic acid), i.e., Nylon 11, polycaprolactam, i.e., Nylon 6, polylaurolactam, i.e., Nylon 12, poly(hexamethylene adipamide-co-caprolactam), i.e., Nylon 6/66, and the product of acid-catalyzed amide formation between adiponitrile, formaldehyde, and water (Nylon 1,6). Examples of suitable polyamides are the Trogamid^{®} polyamides. Mixtures of these polyamides may suitably be used in the TPVs disclosed herein.

### Polyesters

Polyesters are condensation polymers. The various polyesters can be either aromatic or aliphatic or combinations thereof and are generally directly or indirectly derived from the reactions of diols such as glycols having a total of from 2 to 6 carbon atoms and desirably from about 2 to about 4 carbon atoms with aliphatic acids having a total of from about 2 to about 20 carbon atoms and desirably from about 3 to about 15 carbon atoms or aromatic acids having a total of from about 8 to about 15 carbon atoms.

Semi-crystalline polyesters that are produced by the condensation of aromatic diacids with aliphatic diols are most suitable for the practice of this invention. Examples are poly (butylene terephthalate) (PBT), poly (trimethylene terephthalate) (PTT) and poly (ethyleneterephthalate) (PET). Although aromatic/aliphatic polyesters and copolymers thereof with a melting point of about 160°C to 260°C are preferred, also suitable are all aliphatic polyesters within the specified melting range, as for example poly (1,4-cyclohexylenedimethylene-1,4-cyclohexanedicarboxylate) that is disclosed in US 6828410. High MW polyesters are preferred. For example, PBT with Mₙ of about 50,000 and M_{w} of about 100,000 is preferably used in the products of this invention.

### Segmented Polyester Block Copolymers (COPEs)

Segmented polyester block copolymers or COPES are linear condensation multi-block copolymers consisting of alternating hard and soft blocks. Suitable segmented polyester block copolymers include segmented polyester-polyether and the like. These block copolymers contain at least one hard crystalline block of a polyester and at least one rubbery block such as a polyether derived from glycols having from 2 to 6 carbon atoms, e.g., polyethylene glycol, or from alkylene oxides having from 2 to 6 carbon atoms. For example, the hard-crystalline blocks can be derived from high melting aromatic/aliphatic oligomers of (butylene terephthalate), and the soft blocks can be composed of low T_{g} oligomers of aliphatic glycols such as those derived from 1,4-butanediol or the oligomerization of tetrahydrofuran. A preferred block polyester-polyether polymer is polybutyleneterephthalate-b-polytetramethylene glycol which is available as Hytrel from DuPont. Also useful herein are the above described block copolymers where the soft blocks are derived from the oligomerization of trimethylene diol, with PBT hard blocks as described in US 7,244,790. The hard phase melting point of the COPEs of this invention can vary from 160°C to 260°C. High MW COPEs with Mₙ of about 50,000 and M_{w} of about 100,000 are preferred.COPEs suitable for use herein are described in "Thermoplastic Elastomers", G. Holden et al eds., Hanser/Gardner Publications, Inc., Cincinnati, OH, 1996, Ch. 8.

### Rubber Polymers

As used herein, the terms acrylic rubber, acrylate, acrylate rubber, and ethylene acrylate rubber refer to the rubber materials used to form the rubber phase of the thermoplastic vulcanizates of this disclosure. The acrylate rubbers useful as the rubber phase of the thermoplastic vulcanizate are typically polymerized from monomers comprising alkyl acrylates wherein the alkyl portion of the ester has from 1 to 10 or 12 carbon atoms, with from 1 to 4 carbon atoms being preferred. The total carbon atoms of each alkyl acrylate may range from 4 to 13 or 15 carbon atoms and include alkyl substituted, e.g. alkyl alkylacrylates such as methyl methacrylate in small amounts, i.e., desirably less than 5, 10 or 15 mole percent. Desirably the monomers include unsaturated mono or polycarboxylic acids or anhydrides thereof having from about 2 to about 15 carbon atoms. Monomers such as methyl methacrylate form thermoplastic rather than rubbery polymers when present in high amounts. Specific examples of rubbery acrylic polymers include polymers of methyl acrylate, butyl acrylate, butyl acrylate, ethylhexyl acrylate, and the like. The acrylic polymers generally include repeat units with pendant or terminal functionality (e.g., pendant carboxylic groups to facilitate crosslinking with oxazoline curatives). These polymers desirably have from about 1 or 2 to about 10 mole percent, more desirably from about 2 or 3 to about 8 mole percent repeat units with at least one carboxylic acid or anhydride of a dicarboxylic acid. If the polymers are only copolymers of acrylate and acid or anhydride monomers they desirably have from about 90 to about 98 mole percent repeat units from acrylates, more desirably from about 92 to about 97 or 98 mole percent.

The carboxylic acid cure site in the rubber may alternatively be generated by heat during the rubber and plastic melt blending process. For example, tert-butyl acrylate or tert-butoxycarbonyl acrylate that is copolymerized into the ethylene-acrylate or acrylate rubber can decompose to a repeat unit as from acrylic acid and a free isobutylene molecule (and carbon dioxide in the case of the tert-butoxycarbonyl group), thus generating the desired carboxylic acid cure sites. The tert-butyl acrylate. tert-butyl fumarate and/or tert-butoxycarbonyl acrylate are desirably present as repeat units in the amounts set forth above for carboxyl and/or anhydride groups. A limited amount of unmasked acid cure sites in the rubber, or acids such as camphorsulfonic acid or methanesulfonic acid may be used to catalyze decomposition of the pendent tert-butyl groups in such a rubber. The use of the masked cure sites described above may be useful in cases where the rubber does not form a good blend with the plastic due to acid catalyzed decomposition and/or crosslinking reactions of the rubber. When the cure sites in the rubber are masked, the desired cure sites are generated only after an intimate rubber and plastic blend has been formed, thus precluding a premature cure of the rubber portion of the TPV. This technology could therefore offer a process advantage in TPV production. The rubber, plastic, and curative could be melt mixed simultaneously, instead of the normal procedure of adding the curative to the rubber and plastic melt blend. The presence of the masked cure site would prevent rubber crosslinking prior to suitable rubber and plastic blend formation.

Other suitable acrylic rubbers include copolymers of ethylene and the above-noted alkyl acrylates wherein the amount of ethylene is desirably high, e.g. from about 10 to about 90 mole percent, desirably from about 30 to about 70 mole percent, and preferably from about 50 to about 70 mole percent of the repeat groups based upon the total number of moles of repeat groups in the copolymer. Thus, the alkyl acrylates in the copolymer are desirably from about 10 to about 90 mole percent, more desirably from about 30 to about 70 mole percent, and preferably from about 30 to about 50 mole percent of the ethylene-acrylate copolymers.

Other acrylic copolymers include polymers from three or more different monomers such as ethylene-acrylate-carboxylic acid polymers, or ethylene-acrylate-maleic anhydride polymers, wherein the unsaturated acids have from 2 to 15 carbon atoms and desirably from 2 to 10 carbon atoms. Such ethylene-acrylate-maleic anhydride terpolymer rubbers are available from DuPont. More specifically, such polymers from three or more different monomers generally contain from about 35 to about 90 mole percent and desirably from about 48 or 60 to about 80 mole percent of ethylene repeat groups, generally from about 0.5 to about 10 mole percent and desirably from about 1 or 2 to about 8 mole percent of carboxylic acid repeat and/or anhydride groups (e.g. from an unsaturated carboxylic acid), and generally from about 9.5 or 10 to about 60 or 65 mole percent and desirably from about 18 or 19 to about 50 mole percent of alkyl acrylate repeat groups based upon the total number of repeat groups in the terpolymer. The acid repeat groups are preferably carboxylic acid groups derived from unsaturated mono or polycarboxylic acids or anhydrides of unsaturated polycarboxylic acids, which repeat groups have been copolymerized into the acrylic rubber. A specific commercially available compound is Vamac GLS, manufactured by DuPont, which generally has about 68 mole percent ethylene, about 30 mole percent of methyl acrylate, and about 2 mole percent of anhydride functionality.

Suitable acrylate rubber for use herein contain carboxylic acid, chlorine, or anhydride cure sites, or mixtures thereof. The rubbers are typically produced by emulsion polymerization, having a major backbone composition of poly (ethyl acrylate) [T_{g}=-18⁰C, maximum oil resistance] or poly (butyl acrylate) [T_{g}=-55⁰C, poorer oil resistance]. Copolymers of ethyl acrylate and butyl acrylate allow balancing of rubber low temperature properties and oil resistance. Examples of small quantities of additional monomers that are copolymerized into the acrylate backbone described above, for further optimizing rubber low temperature properties and oil resistance include methoxyethyl (meth)acrylate and polyethylene glycol (meth)acrylate (US 2018/0118866). Examples of suitable commercially available acrylate rubber for the practice of his invention include HyTemp^{R} 4065 and 4053 EP (both products containing carboxylic acid plus chlorine cure sites) and HyTemp^{R} AR715 (chlorine cure sites only).Ethylene-acrylate rubber of this invention Vamac^{R} elastomers from DuPont such as Vamac^{R} Ultra HT and Vamac^{R} GLS. Vamac^{R} GLS (T_{g}=-26⁰C) is composed of the following copolymerized monomers: 62.7 wt% methyl acrylate, 33.4 wt% ethylene and 3.9 wt% of monoethyl fumarate as cure site, as per US 2018 / 0118866. The above patent also describes the preparation of ethylene-acrylate polymers suitable for the practice of this invention with balanced rubber low temperature properties and oil resistance. A key monomer used in this technology is polyethylene glycol (meth)acrylate.

### Plasticizers

Thermoplastic vulcanizates disclosed herein can further comprise a plasticizer that may be melt miscible with both the rubber phase and the plastic phase. Suitable plasticizers for use herein are selected from polyether esters, monomeric ether esters, aliphatic polymeric esters, aromatic polymeric esters, polyesters, ester terminated poly butylene adipates, sulfonamides, and mixtures thereof. Plasticizers that are melt miscible with the TPV plastic phase, or rubber phase, or both, are useful in certain aspects of this disclosure. In certain embodiments, the plasticizer is not melt-miscible with either the rubber phase or the plastic phase.

The amount of plasticizer ranges from about 4 parts to about 35 parts, based on 100 parts of rubber and plastic phases in the formulation. Suitable amounts of plasticizer, based on 100 parts of rubber, when present in the TPV formulations are about 4 parts, about 10 parts, about 15 parts, about 20 parts, about 25 parts, about 30 parts, and about 35 parts. Particular amounts of plasticizer based on 100 parts of plastic and rubber in the TPV formulations include about 1, 2, 3, 4, 5, 6, 7, 8, 9, 10, 11, 12, 13, 14, 15, 16, 17, 18, 19 or 20 parts.

In certain aspects of this disclosure, TPV formulations comprise about 40 parts to about 70 parts of plastic, and from about 60 parts to about 30 parts of rubber, in addition to an effective amount of a plasticizer. Effective amounts of the plasticizer are from about 4 parts or 8 parts to about 35 parts per 100 parts of rubber and plastic phases.

Examples of such formulations include those containing rubber and plastic at a rubber to plastic weight ratio of about 1.1 to about 1.35 (about 52-57 parts rubber to about 48-43 parts plastic) and about 4 parts to about 35 parts, based on 100 parts of the rubber and plastic phases, of a plasticizer.

In certain aspects, a plasticizer is incorporated into the TPV formulation to achieve processable (low enough melt viscosity, excellent fabricated product surface appearance) TPV compositions with plastic content of about 70 weight per cent or lower, based on only the rubber and plastic in the composition. In certain situations, at this level of plastic, lack of plasticizer results in some molding machines being incapable of fabricating the TPV melt due to high viscosity, or the fabricated product exhibits severe melt fracture. The plasticizer is preferably miscible with the TPV plastic phase only, although plasticizers that are miscible with both the TPV rubber and plastic phase are also acceptable.

### Plasticizers for Nylons

Many plasticizers that hydrogen bond with Nylons may be highly selective in being melt miscible with the plastic in comparison to ACM or AEM. Examples of these plasticizers include benzenesulfonamide (solid at room temperature) and various N-alkylbenzenesulfonamides (solid or liquid at room temperature). For example, N-butylbenzenesulfonamide (Uniplex 214) and N-ethyl-o/p-toluenesulfonamide (Uniplex 108) are liquids, whereas some N-alkyl-p-toluenesulfonamides are solids. Other solid plasticizers for Nylon include methyl or propyl 4-hydroxybenzoate.

When a plasticizer is preferentially melt-miscible with the TPV plastic phase only, it increases the plastic melt volume which helps in preventing rubber particle agglomeration. Prevention of rubber particle agglomeration is important when intensive melt mixing of the TPV stops as the product is pumped into the die for strand formation, and subsequent strand cutting into pellets. Thus, a strand with a smooth surface and no melt fracture can be produced.

Suitable plasticizers for use in TPVs of this disclosure made with Nylon are disclosed in Polymer International, 51, 40-49 (2001); Polym. Bull., 68, 1977-1988 (2012); Polym. Adv. Technol., 23, 938-945 (2012); and Polym. Adv. Technol., 28, 53-58 (2017).

### Plasticizers for Polyesters

Plasticizers for PBT include 2,2-dimethylpropane diol 1,3-dibenzoate (Uniplex 512), polyethylene glycol dilaurate (Uniplex 810), and other polyethylene glycol esters such as Tegmer 809, 810, and 812. Also useful are poly alkylene adipates of various MWs such as Plasthall P-643, Dioplex 904, Dioiplex 7069, Paraplex G-54, ParaplexA 8600, Paraplex A8210, and Paraplex A 8000, that are available from Hallstar. Particularly useful is an ester terminated poly 1,3-butylene adipate (PN-250) from Amfine that has a low freezing point (-20°C) and excellent thermal and thermo-oxidative stability.

### Plasticizers for ACM and AEM

Many low volatility ether ester plasticizers such as TP-90B, TP-95, TP-759, Tegmer 39-N, 804S, 809, 810, and 812 that are also plasticizers for PBT are also suitable for ACM and AEM. The Plasthall series ester plasticizers like Plasthall TOTM are also useful. Suitable plasticizers for use with the rubbers of this disclosure are described in in Rubber World p. 32, April 2015.

### Other Plasticizers for Nylons, Polyesters and COPEs

Also acceptable are plasticizers that are melt miscible with the TPV plastic phase, but are immiscible in the crystalline plastic phase of the TPV at room temperature, and hence may be present as sub-micron pools of liquid in the TPV plastic phase at room temperature, but show no tendency for exudation from TPV pellets or molded parts produced from the TPV.

### Addition Type Curing Agent

The rubber is preferably cured utilizing various curative compounds including oxazoline, oxazine, and imidazolines such as bisimidazoline. More specifically, the rubber phase is cured via reactive groups, e.g., carboxylic acid moieties, in the rubber.

Suitable addition-type rubber curing agents for use herein include those that do not break down the TPV plastic phase, and allow linking of the plastic and rubber macromolecules (plastic and rubber compatibilization). In addition, suitable curing agents cure the rubber without the evolution of volatile small molecules, such as water, which are detrimental to TPV fabricability.

Preferred addition curative or cross-linking agents are oxazolines or oxazines such as those having Formula A or Formula B 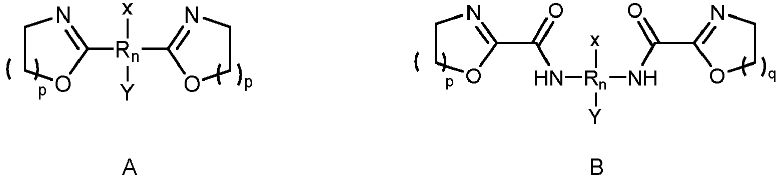 wherein R or R' is an aliphatic or aromatic hydrocarbon group such as alkylene or arylene having 1 to 24 carbon atoms optionally substituted with one or more alkyl groups having 1 to 6 carbon atoms or substituted with an aryl group having 6 to 9 carbon atoms; n is 0 or 1, when n equals 1 then X and Y are hydrogen atoms or independently an 2-oxazoline group or a 1,3-oxazine group, or a 2-oxazoline group or a 1,3-oxazine group and a hydrogen atom, with the remaining carbon atoms having hydrogen atoms thereon, p and q, independently, is 1 or 2, and when n equals 0 then R, X, and Y are absent.

Further, each oxazoline group of the above formula may optionally be substituted with an alkyl of 1 to 6 carbon atoms. Additional polyvalent oxazolines are described in U.S. Pat. No. 4,806,588.

Preferred examples of curing agents of Formulae A and B include bisoxazolines, particularly bisoxazolines of the formulas A1 and B1, 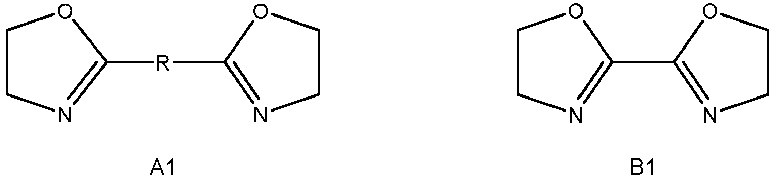 wherein R is an aliphatic, cycloaliphatic, aromatic, or heteroaromatic group, or a mixture thereof, where the total number of carbon atoms in R can vary from 1 to 24.

Particularly preferred curing agents are 2,2'-(1,3-phenylene)-bis-(2-oxazoline) (1,3-PBO), 2,2'-(2,6-pyridylene)-bis-(2-oxazoline) (2,6-PyBO), 2,2'-(1,4-phenylene)-bis-(2-oxazoline) (1,4-PBO), and mixtures thereof.

Oxazolines such as 1,3-PBO and 2,6-PyBO react with the acid functionality that is pendent to the rubber backbone to form ester-amide cross-links. Nylons and polyesters can also get linked to the rubber by selective reaction of the curing agent with only the end acid functionality of these plastic macromolecules, that is, neither the amine end groups of nylons nor the hydroxyl end groups of polyesters exhibit notable reactivity with 1,3-PBO under typical reaction conditions.

2,6-PyBO has a faster rubber cure rate than 1,3-PBO and, therefore, can be used advantageously when rapid cure is desired.

Other curing agents can be utilized such as free radical generating compounds, but are less desirable and are therefore used in small amounts such as, for example, less than 1.0 parts by weight and desirably less than 0.5 parts by weight based upon 100 parts by weight of the rubber.

Various bismaleimides as well as phenolic resins can also be used as curatives. Examples of bismaleimides include a bismaleimide based on methylene dianiline (e.g., Matrimid 5292A from Ciba-Geigy), a bismaleimide based on toluene diamine (e.g., HVA-2 from DuPont), and the like. The phenolic curing agents are well known to the art and literature and include polymers obtained by the polymerization of phenol with formaldehyde. The polymerization rate is pH dependent, with the highest reaction rates occurring at both high and low pH. A more detailed description of the preparation of phenolic resins is set forth in "Principles of Polymerization" 3.sup.rd Edition, George Odian, pages 125-131, John Wiley Sons, Inc., N.Y., N.Y., 1991, which is hereby fully incorporated by reference. Examples of specific phenolic resins include those of formula C 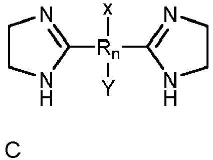 where R and n are defined as above for the multifunctional (polyvalent) oxazolines and X and Y, are a hydrogen atom, or, independently, an imidazoline group, or an imadazoline group and an hydrogen atom. A preferred multifunctional imidazoline is bismidazoline.

Still another group of addition type curing agents are the various multifunctional epoxides such as the various Shell Epon^{®} resins, epoxidized vegetable oils, tris(2,3-epoxypropyl)isocyanate, and 4,4'-methylene bis(N,N-diglycidylaniline), and multifunctional aziridines. A particularly useful epoxide for use herein as the addition type curing agent is a styrene/glycidyl methacrylate copolymer.

In certain embodiments, the curing agent, typically an excess of the curing agent relative to plastic, can be melt blended with the plastic to produce a blend of curative and plastic. The excess curing agent end-functionalizes the carboxylic acid moieties of the plastic macromolecules which compatibilizes the plastic with the rubber and limits chain extension of the plastic macromolecules.

The amount of the curative or curing agent is generally from about 1 to 15, desirably from 3 to 12 parts by weight for every 100 parts by weight of the rubber and the plastic. Suitable amounts of curing agent include about 1, 2, 3, 4, 5, 6, 7, 8, 9, 10, 11, 12, 13, 14 and 15 parts by weight for every 100 parts by weight of the rubber and the plastic. Particularly useful amounts of curing agent range from about 1 parts to about 15 parts based on 100 parts of rubber and the plastic.

In certain aspects, oxazoline curing agents are used to avoid degradation of the TPV plastic phase and allow selective addition crosslinking of the rubber. In certain aspects, oxazoline curing agents avoid product processability problems that can be caused by volatile by-products from the curing reaction being trapped in the TPV melt.

The addition curatives effect cross-linking by reacting with the carboxylic acid groups present in the rubber or double bonds of the diene hydrocarbon portion derived from the diene monomer. The amount of curatives used results in at least a partially cured rubber and preferably a fully or completely vulcanized rubber.

The terms "fully vulcanized" and "completely vulcanized" as used in the specification and claims means that the rubber component to be vulcanized has been cured to a state in which the elastomeric properties of the cross-linked rubber are similar to those of the rubber in its conventional vulcanized state, apart from the thermoplastic vulcanizate composition, or as indicated by no more change in tensile strength. The degree of cure can be described in terms of gel content or, conversely, extractable components. Alternatively, the degree of cure may be expressed in terms of cross-link density. All of these descriptions are well known in the art, for example, in U.S. Pat. Nos. 5,100,947 and 5,157,081, both of which are fully incorporated herein by this reference. By the term "partially vulcanized" (i.e., degree of cure), it is meant that about 30 percent or less and desirably about 10 percent or less by weight of a rubber is soluble in methyl ethyl ketone at 80°C. By the term "fully vulcanized" (i.e., degree of cure), it is meant that about 5 percent or less of the cured rubber is soluble in a methyl ethyl ketone at 80°C.

### Cure Accelerators

In certain aspects, the thermoplastic vulcanizates disclosed herein can further comprise a cure accelerator selected from aryl phosphites, alkyl phosphites, aryl/alkyl phosphite, and mixtures thereof. Particular cure accelerators suitable for use herein are selected from tris(2,4-di-*t*-butylphenyl) phosphite, bis(2,4-di-*t*-butylphenyl)pentaerythritol diphosphite, and mixtures thereof.

### Optional Additives

In addition to the thermoplastic polymer, ACM or AEM, plasticizer, and the curing agent, the thermoplastic vulcanizates disclosed herein can include various conventional additives such as reinforcing and non-reinforcing fillers, antioxidants, antiozonants, anti-blocking agents, anti-static agents, waxes, foaming agents, pigments, flame retardants and other processing aids known in the rubber and plastics compounding art. Such additives can comprise up to about 40 weight percent of the total composition, and can be in the plastic phase, the rubber phase or both. Fillers and extenders which can be utilized include conventional inorganics such as calcium carbonate, clays, silica, talc, titanium dioxide, carbon black, and the like.

In certain embodiments, processing aids are preferably avoided in the thermoplastic vulcanizates disclosed herein. Thus, preferred thermoplastic vulcanizates of this disclosure are free or substantially free (i.e., less than about 0.5%, or 0.1%, or 0.05%, or 0.01%, or 0.005% by weight of the thermoplastic vulcanizate) of a processing aid(s).

### Use

The thermoplastic vulcanizate compositions of this disclosure can be used in applications wherever thermoset ACM or AEM is used. The thermoplastic vulcanizates disclosed herein may be formed into a variety of products, including for example gaskets, tubes, hose, boots, seals, vibration dampeners, stators, fittings, housings, cases, films, shock absorbers, antivibration mounts, couplings, bushings, sleeves, bellows, foams, etc. The thermoplastic vulcanizates disclosed herein are particularly useful for manufacturing tubes and hoses comprising at least one layer comprising thermoplastic vulcanizate. The thermoplastic vulcanizates disclosed herein are particularly useful for use in automobiles.

Thus, they can be utilized as seals, as gaskets, hoses, boots, and the like, especially for automotive applications. The TPVs of this disclosure are particularly useful for making hoses, especially hoses that comprise multiple layers wherein at least one layer is a jacket or core tube formed from a TPV of this disclosure. The jacket or core tube can include one or more layers formed from a TPV of this disclosure (where multiple jacket or core tube layers may be the same or a different TPV of this disclosure), optionally in combination with a jacket or core tube layer made from one or more other materials.

The invention will be better understood by reference to the following examples which serve to illustrate, but not to limit, the present invention.

### Process

This disclosure also provides processes for producing thermoplastic vulcanizates. In certain embodiments, the processes comprise mixing a composition comprising a plastic phase and a rubber phase with an addition type curing agent. The mixing is typically carried out under conditions of shear and at a temperature above the melting point of the plastic phase.

This invention is best practiced using equipment that can blend polymeric materials at a shear rate that permits intimate material melt blending, but at a shear rate that is low enough to prevent excessive material thermal and thermo-oxidative degradation, and also mechano-chemical degradation, due to shearing forces. The residence time (about 2 minutes) of the polymer melt blend in the production equipment is also comparable to that used in commercially viable TPV manufacturing processes.

Adequate process temperature control and polymer melt blending using minimal shearing of the polymer melt blend is advantageous. The TPVs disclosed herein can be prepared using corotating or counter rotating twin screw extruders (TSEs), with elements that allow excellent polymer melt blending at low shear rate conditions (<5000 s⁻¹).

A particularly suitable single screw extruder for preparation of the TPVs of this invention is the Buss Kneader. Here, a reciprocating single screw, where the screw shaft consists of different elements (kneading, conveying, etc.) shears the polymer melt blend by the action of the screw elements on fixed (but adjustable) pins on the extruder barrel. Thus, intense polymer melt blending can be achieved at a low shear rate (<1100 s-1), resulting in excellent polymer melt temperature control. Owing to the low shear rate profile of the Buss when compared to TSEs, the former machine is much less torque limited than the latter.

A desirable degree of cross-linking, i.e., partial or complete, can be achieved by adding one or more of the above-noted rubber curatives to the blend of a thermoplastic or the thermoplastic elastomer and AEM or ACM and vulcanizing the rubber to the desired degree under conventional vulcanizing conditions, preferably using dynamic vulcanization. Dynamic vulcanization is affected by mixing the thermoplastic vulcanizate components at elevated temperature in conventional mixing equipment such as roll mills, Banbury mixers, Brabender mixers, continuous mixers, mixing extruders, and the like. The unique characteristic of dynamically cured compositions is that, notwithstanding the fact that the rubber component is partially or fully cured, the compositions can be processed and reprocessed by conventional plastic processing techniques such as extrusion, injection molding, blow molding and compression molding. Scrap or flashing can be salvaged and reprocessed.

In certain embodiments of the processes disclosed herein, the rubber phase and the plastic phase are melt-blended prior to the addition of the addition type curing agent.

In certain embodiments of the processes disclosed herein, the rubber phase and the plastic phase are melt-blended while the curing agent is added to the composition.

In certain embodiments of the processes disclosed herein, the process comprises:
prior to melt blending with the rubber, melt blending the plastic phase with a predetermined amount of rubber curative to form a semi-cured plastic phase;
mixing the semi-cured plastic phase with the rubber phase to form a blend of plastic phase and rubber phase, and
adding additional curing agent to the blend of rubber phase and plastic phase with continued melt mixing.

Melt blending the plastic phase with a predetermined amount of rubber curative acts to functionalize the plastic acid end groups and to minimize plastic chain extension and residual rubber curing agent in the plastic phase.

In certain embodiments of the processes disclosed herein, the maximum shear rate in the process is less than 10,000 s⁻¹, or 7000 s⁻¹ or 3000 s⁻¹. In other embodiments, the maximum shear rate is less than 5000s⁻¹.

In certain embodiments of the processes disclosed herein, the composition is prepared by melt blending the plastic phase with the curing agent to form a plastic phase/curing agent blend, and melt blending the plastic phase/curing agent blend with the rubber phase.

In certain embodiments of the processes disclosed herein, the composition further comprises a cure accelerator selected from aryl phosphites, alkyl phosphites, aryl/alkyl phosphite, and mixtures thereof. Particular cure accelerators suitable for use in the processes disclosed herein are selected from tris(2,4-di-*t*-butylphenyl) phosphite, bis(2,4-di-*t-*butylphenyl)pentaerythritol diphosphite, and mixtures thereof.

In certain embodiments of the processes disclosed herein, the cure accelerator is added to the mixture at any time during the process.

In certain embodiments of the processes disclosed herein, a plasticizer as described above can be introduced as plasticizer when convenient and appropriate during the process.

The present invention will be better understood by reference to the following examples, which serve to illustrate, but not limit, the practice of this invention.

### Examples

### General Procedure

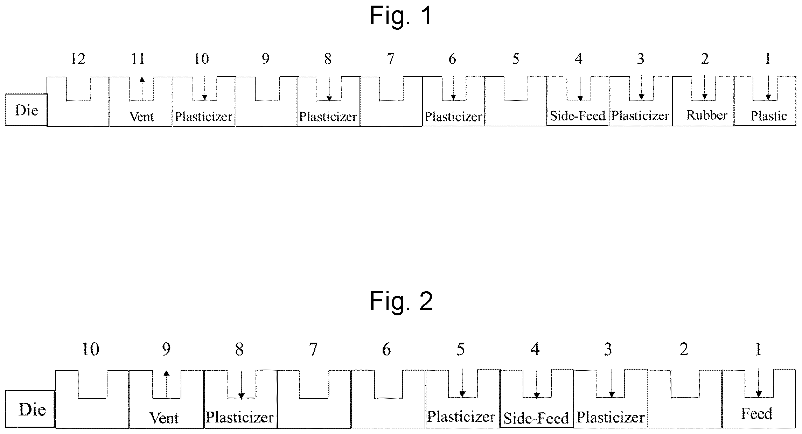

Figures 1 and 2 are the diagrams of the barrels of the twin-screw extruders suitable for use in the following examples. These equipment blend polymeric materials at a shear rate that permits intimate material melt blending, but at a shear rate that is low enough to prevent excessive material thermal and thermo-oxidative degradation, and also mechano-chemical degradation, due to shearing forces. The residence time of the polymer melt blend in these production equipment is about 2 minutes.

Plastic pellets are fed into the throat of a 26 mm co-rotating twin screw extruder. Rubber is fed into barrel #2 for TEM-26SS extruder and feed throat for ZSK 26 extruder. After intimate rubber and plastic melt blending is achieved, addition type curing agent is fed into the polymer melt blend with intensive mixing which initiates the dynamic vulcanization process. Precautions (barrel cooling, screw design) are taken to limit shear heating (due to the viscous drag of the molten plastic over the newly formed cross-linked rubber particles) in the dynamic vulcanization zone as the AEM or ACM is broken up into cross-linked particulate rubber, about 1µm to 10µm in diameter.

When used, plasticizer may be added to the polymer melt blend prior to dynamic vulcanization for temperature control, provided that curative dilution due to plasticizer addition does not preclude completion of cure in the dynamic vulcanization zone. Alternatively, a part or all of the plasticizer can be added downstream after completion of dynamic vulcanization.

The curing agent, typically a powder, can be supplied directly to the extruder feed throat. Alternatively, the curing agent can be supplied as a powder coating or dusting on the rubber granules. As another alternative, the curing agent may also be melt blended with the plastic phase, pelletized, and the resulting pellets can subsequently be used for TPV preparation. Melt blending the curing agent with the plastic prior to mixing with the rubber permits the curative to end-functionalize the carboxylic acid moieties of the plastic macromolecules which compatibilizes the plastic with the rubber and limits chain extension of the plastic macromolecules.

### Materials

**Rubber Material**

| **Trade Name** | **Description** |
|---|---|
| Vamac Ultra HT | DuPont: (Baled rubber) Ethylene Acrylic Elastomer. |
| | ML(1+4, 100°C)=29. |
| Vamac Ultra IP | DuPont: (Baled rubber) Ethylene Acrylic Elastomer. |
| | ML(1+4, 100°C)=29. |
| Vamac HVG | DuPont: (Baled rubber) Ethylene Acrylic Elastomer. |
| | ML(1+4, 100°C)=26. |
| Vamac GXF | DuPont: (Baled rubber) Ethylene Acrylic Elastomer. |
| | ML(1+4, 100°C)=17.5. |
| Vamac GLS | DuPont: (Baled rubber) Ethylene Acrylic Elastomer. |
| | ML(1+4, 100°C)=18.5. |
| Vamac G | DuPont: (Baled rubber) Ethylene Acrylic Elastomer. |
| | ML(1+4, 100°C)=16.5. |
| Vamac VMX3123 | DuPont: (Baled rubber) Ethylene Acrylic Elastomer. |
| | ML(1+4, 100°C)=24. |
| HyTemp 4053EP | Zeon: (Baled rubber) Acrylic Elastomer. |
| | ML(1+4, 100°C)=27. |
| HyTemp 4065 | Zeon: (Baled rubber) Acrylic Elastomer. |
| | ML(1+4, 100°C)=36. |

**Plastic Material**

| **Trade Name** | **Description** |
|---|---|
| Ultramid B33 01 | BASF: (Pellets) Nylon 6, m.p. =220°C, Intermediate molecular weight product, relative viscosity (1wt% in 96 wt% H₂SO₄ @ 23°C): 3.3. |
| Valox 315 | SABIC: (Pellets) Poly (butylene terephthalate), m.p.=223°C, Melt Volume Rate (cm³/10 min @ 250°C, 2.16 kg): 9. |
| Ultradur B6550 | BASF: (Pellets) Poly (butylene terephthalate), m.p. =220-230°C, higher molecular weight product, Melt Flow Rate (cm³/10 min @ 250°C, 2.16 kg): 11.7. |

**Plasticizer**

| **Trade Name** | **Description** |
|---|---|
| Uniplex 214 (BBSA) | LANXESS: (Liquid) N-n-butylbenzene sulfonamide, b.p. 314°C. |
| PN-250 | AMFINE: (liquid) Ester terminated poly (1,3-butylene) adipate. Freezing point: -20°C. TGA (Air): 10°C/min heating rate, 5 wt% loss by 278°C. |
| TegMeR 810 | HALLSTAR: (Liquid) Polyethylene glycol di-2-ethylhexyl ester, b.p. =300°C |

**Curing Agent**

| **Trade Name** | **Description** |
|---|---|
| 1,3-PBO | EVONIK: (Powder) 2,2'-(1,3-Phenylene)-bis (oxazoline-2), m.p.= 147°C-151°C. |

### TPV compounding/extrusion

AEM/ACM TPVs of this disclosure made with Nylon or PBT can be either compounded in a batch mixer (e.g. RSI's Techmix 6) or a continuous twin-screw extruder (e.g. Coperion's ZSK 26 or NFM's TEM-26SS ) or a reciprocating kneader (e.g. BUSS' Kneader MX-30).

AEM/ACM TPVs of this disclosure made with Nylon or PBT are reactively compounded on two different twin-screw extruders: a TEM-26SS, 12 barrel, NFM two-lobe twin-screw extruder (L/D = 48, FIGURE 1), and a ZSK 26 mm, 10 barrel, co-rotating, Coperion two-lobe twin screw extruder (L/D = 40, FIGURE 2).

For TEM-26SS extruder, the barrels are configured as:
Barrel #1 (Unheated): Conveying elements
Barrel #s 2 -3: Kneading elements to melt plastic material and to produce an intimate rubber and plastic melt blend.
Barrel #s 4-10: Dynamic vulcanization zone: a combination of kneading elements ensures intensive polymer melt blending during dynamic vulcanization, while limiting rise in polymer melt blend temperature and pressure.
Barrel #s 11-12: Conveying elements.
Die: 3-hole

Material is fed into the extruder at an appropriate rate and screw speed selected to permit sufficient residence time for dynamic vulcanization to take place.

Plastic pellets are fed into the hopper attached to barrel #1. Curing agent, 1,3-PBO, and antioxidant 405, both as powders, are either fed together into barrel #4 via a side feeder (SF) or into the feed throat (FT). Rubber is metered directly into barrel #2. A plasticizer is introduced when convenient and appropriate during the process.

Barrel temperatures are selected based on melting points and/or softening points of the plastic and other TPV components. Barrel temperatures should be adjusted to avoid component decomposition.

After extrusion, strands are water cooled, pelletized, and dried.

Barrels #4 and #11 were vented to the atmosphere, and the screw design facilitates the formation of a melt seal on both sides of these barrels.

### Preparation of plastic pellets formed from a blend of curing agent and plastic

Melt blends of thermoplastic pellets and the curative powder are made with a low intensity mixing screw, with barrel set temperatures low enough to just melt the resin and mix with the powder. Plastic pellets are fed into the extruder feed throat, while the powder is added though the side feeder in barrel #4.

For ZSK 26 extruder, the barrels are configured as:
Barrel #1 (Unheated): Conveying elements
Barrel #s 2 -3: Kneading elements to melt plastic materials and to produce an intimate rubber and plastic melt blend.
Barrel #s 4-8: Dynamic vulcanization zone: a combination of kneading elements ensures intensive polymer melt blending during dynamic vulcanization, while limiting rise in polymer melt blend temperature and pressure.
Barrel #s 9-10: Conveying elements.
Die: 3-hole

Material is fed into the extruder at an appropriate rate and screw speed selected to permit sufficient residence time for dynamic vulcanization to take place.

Plastic pellets and clay-dusted granulated rubber are fed into the hopper attached to barrel #1. Curing agent, 1,3-PBO, and Antioxidant 405, both as powders, are fed together into barrel #4 via a side feeder.

Barrel temperatures are selected based on melting points and/or softening points of the plastic and other TPV components. Barrel temperatures should be adjusted to avoid component decomposition.

After extrusion, strands are water cooled, pelletized, and dried.

Barrels #4 and #9 were vented to the atmosphere, and the screw design facilitates the formation of a melt seal on both sides of these barrels.

### Laboratory Batch Mixer

Techmix 6 (RSI) or Haake RheomixTM 3000 (Thermofisher) mixer with three heating zones is used and connected to an ATR Plasti-Corder (C.W. Brabender) torque rheometer for temperature and torque control. The three zones and the stock temperature are set at the temperatures above the melting point of the plastic phase. The mixing conditions are as follows: 5-15 minutes of total mixing time, 65% fill factor, 50-150 RPM rotor speed for Banbury rotors. The plastic and the rubber were first added to the mixer and then the curative, the antioxidant, the plasticizer, and the other components (if any) were added at any time during the mixing process.

### Single screw extrusion

TPV pellets are extruded into tapes using a single screw extruder, for physical property and process-ability testing. Tensile dumbbells are cut from the tapes. TPV pellets are also injection molded into tensile bars, flex bars, and compression set buttons.

A Brabender single screw extruder (L/D =25, 3/4" screw) is used and connected to an RS-5000 (RSI) torque rheometer for temperature and torque control. The extruder includes three heated zones (barrels set at 235°C), with the die temperature set at 245°C. The screw consisted of a small Maddock mixing section, with the remaining sections being built-up of conveying elements.

### Injection molding

After the TPV pellets are made, they are processed by an injection molding machine into tensile bars, flex bars, and compression set buttons, for testing. A Sumitomo Systec 90-310 injection molding machine having three heated zones (barrel set temperatures: 235°C, 240°C, and 245°C), with nozzle set at 250°C is used for injection molding. Screw speed is 150 rpm, with different formulation dependent holding pressures, typically between 1700-2500 psi.

### Property testing

Tensile (5 specimens), flexural modulus (3 specimens), hardness (5 measurements), and compression set (3 specimens) tests are conducted as per ASTM D638, ASTM D790, ASTM D2240, and ASTM D395 respectively. In all cases, the median test value is reported.

All quantities shown in the below tables are weight percentages unless otherwise specified.

### Example 1

Plasticized TPV formulations compounded from Valox 315 (Poly(butylene terephthalate)) and ethylene-acrylate rubber at a 45/55 plastic to rubber weight ratio, with 1,3-PBO as curing agent, are shown below in Table 1. The properties of these formulations and the processing conditions used to produce them are also presented in Table 1.

**Table 1. Formulations in Weight%, Properties and Processing Conditions for Valox 315/Vamac Ultra HT TPVs where Powders are Fed at Different Locations**

| **Formulation no.** | **1-SF** | **2-SF** | **1-FT** | **2-FT** |
|---|---|---|---|---|
| Vamac Ultra HT | 52.14 | 48.45 | 52.14 | 48.45 |
| Valox 315 | 42.65 | 39.65 | 42.65 | 39.65 |
| PBO | 5.21 | 4.85 | 5.21 | 4.85 |
| PN-250 | 0.00 | 7.05 | 0.00 | 7.05 |
| Total | 100.00 | 100.00 | 100.00 | 100.00 |

| **Properties** | **1-SF** | **2-SF** | **1-FT** | **2-FT** |
|---|---|---|---|---|
| Injection Molded: Tensile Strength @ RT (psi) | 3011.00 | 2286.00 | 3052.00 | 2227.00 |
| Injection Molded: Elongation @ RT (%) | 130.00 | 129.00 | 103.00 | 106.00 |
| Injection Molded: Tensile Strength @ 150°C (psi) | 930.00 | 681.00 | 884.00 | 685.00 |
| Injection Molded: Elongation @ 150°C (%) | 100.00 | 94.00 | 87.00 | 92.00 |
| Injection Molded: Flexural Modulus @ RT (psi) | 62871.00 | 44117 | 60074.00 | 44652.00 |
| Injection Molded: Compression Set @150°C, 70 hrs (%) | 96.37 | 95.85 | 95.90 | 94.00 |

| **Twin-Screw Processing Conditions** | **1-SF** | **2-SF** | **1-FT** | **2-FT** |
|---|---|---|---|---|
| Screw Speed (RPM) | 150-400 | 150-400 | 150-400 | 150-400 |
| Feed rate (Ib/hr) | 30-60 | 30-60 | 30-60 | 30-60 |
| Average Torque (%) | 72 | 63 | 77 | 65 |

### Example 2

Plasticized TPV formulations compounded from Ultramid B33 01 (Nylon 6) and ethylene-acrylate rubber at a 45/55 plastic to rubber weight ratio, with 1,3-PBO as curing agent, are shown below in Table 2. The properties of these formulations and the processing conditions used to produce them are also presented in Table 2.

**Table 2. Formulations in Weight%, Properties and Processing Conditions for Ultramid B33 01/Vamac Ultra HT TPVs where Powders are Fed at Different Locations.**

| **Formulation No.** | **3-SF** | **4-SF** | **3-FT** | **4-FT** |
|---|---|---|---|---|
| Vamac Ultra HT | 52.14 | 45.27 | 52.14 | 45.27 |
| Ultramid B33 01 | 42.65 | 37.04 | 42.65 | 37.04 |
| PBO | 5.21 | 4.53 | 5.21 | 4.53 |
| BBSA | 0.00 | 13.16 | 0.00 | 13.16 |
| Total | 100.00 | 100.00 | 100.00 | 100.00 |

| **Properties** | **3-SF** | **4-SF** | **3-FT** | **4-FT** |
|---|---|---|---|---|
| Injection Molded: Tensile Strength @ RT (psi) | 4421.00 | 3261.00 | 4652.00 | 3316.00 |
| Injection Molded: Elongation @ RT (%) | 122.00 | 172.00 | 155.00 | 186.00 |
| Injection Molded: Tensile Strength @ 150°C (psi) | 1769.00 | 1224.00 | 1778.00 | 1232.00 |
| Injection Molded: Elongation @ 150°C (%) | 157.00 | 164.00 | 172.00 | 174.00 |
| Injection Molded: Flexural Modulus @ RT (psi) | 56452.00 | 17889.00 | 56507.00 | 17083.00 |
| Injection Molded: Compression Set @150°C, 70 hrs (%) | 98.18 | 105.59 | 104.34 | 108.20 |

| **Twin-Screw Processing Conditions** | **3-SF** | **4-SF** | **3-FT** | **4-FT** |
|---|---|---|---|---|
| Screw Speed (RPM) | 150-400 | 150-400 | 150-400 | 150-400 |
| Feed rate (Ib/hr) | 30-60 | 30-60 | 30-60 | 30-60 |
| Average Torque (%) | 88 | 65 | 86 | 64 |

Reasonable TPV physical properties are obtained and are shown in both Table 1 (PBT/ ethylene-acrylate rubber TPVs) and Table 2 (Nylon 6/ ethylene-acrylate rubber TPVs). The mode of PBO addition had a little effect on TPV physical properties.

### Example 3

Plasticized TPV formulations using 1,3-PBO (curative) compounded using Valox 315 (Poly(butylene terephthalate)) and different AEM grades at the same rubber/plastic ratio (60/40) without any processing aid, are shown below in Table 3. The TPV formulations are prepared in the laboratory batch mixer. The formulations and physical properties of the resulting PBT/AEM TPVs are shown below in Table 3.

**Table 3. Formulations in Weight% for PBT/AEM TPVs Made on Laboratory Mixer Without Using Any Processing Aid.**

| | **Thermoplastic Vulcanizate (TPV) Formulation** | | | | | | |
|---|---|---|---|---|---|---|---|
| **Formulation No.** | **5** | **6** | **7** | **8** | **9** | **10** | **11** |
| Valox 315 | 35.56 | 35.56 | 35.56 | 35.56 | 35.56 | 35.56 | 35.56 |
| Vamac Ultra IP | 53.33 | - | - | - | - | - | - |
| Vamac HVG | - | 53.33 | - | - | - | - | - |
| Vamac GXF | - | - | 53.33 | - | - | - | - |
| Vamac GLS | - | - | - | 53.33 | - | - | - |
| Vamac G | - | - | - | - | 53.33 | - | - |
| Vamac VMX 3123 | - | - | - | - | - | 53.33 | - |
| Vamac Ultra HT | - | - | - | - | - | - | 53.33 |
| PBO | 2.67 | 2.67 | 2.67 | 2.67 | 2.67 | 2.67 | 2.67 |
| Antioxidant 405 | 1.33 | 1.33 | 1.33 | 1.33 | 1.33 | 1.33 | 1.33 |
| TegMeR 810 | 7.11 | 7.11 | 7.11 | 7.11 | 7.11 | 7.11 | 7.11 |
| **Property** | | | | | | | |
| Injection Molded: Compression Set @150°C, 70 hr (%) | 90.07 | 89.16 | 90.75 | 86.60 | 88.14 | 92.81 | 88.72 |

### Example 4

TPV formulations using 1,3-PBO (curative) compounded using Ultradur B6550 (Poly(butylene terephthalate)) and Vamac Ultra HT (AEM rubber), and Ultramid B33 01 (Nylon 6) and Vamac Ultra HT (AEM rubber), at the same rubber/plastic ratio (65/35) without any processing aid, are shown below in Table 4. The TPV formulations are prepared in the laboratory batch mixer. The formulations and physical properties of the resulting PBT/AEM and Nylon 6/AEM TPVs are shown below in Table 4.

**Table 4. Formulations in Weight% for Ultradur B6550/Vamac Ultra HT and Ultramid B33 01/Vamac Ultra HT TPVs Made on Laboratory Mixer Without Using Any Processing Aid.**

| | **Thermoplastic Vulcanizate (TPV) Formulation** | |
|---|---|---|
| **Formulation No.** | **12** | **13** |
| Ultradur B6550 | 33.02 | - |
| Ultramid B33 01 | - | 30.17 |
| Vamac Ultra HT | 61.32 | 56.03 |
| PBO | 3.77 | 3.45 |
| Antioxidant 405 | 1.89 | 1.72 |
| BBSA | - | 8.62 |
| **Property** | | |
| Injection Molded: Compression Set @150°C, 70 hr (%) | 77.20 | - |
| Hardness, Instantaneous (Shore A) | 78.70 | 86.5 |
| Hardness, Instantaneous (Shore D) | 33.90 | 44.90 |

### Example 5

TPV formulations using 1,3-PBO (curative) compounded using Valox 315 (Poly(butylene terephthalate)) and two different grades of ACM (HyTemp 4065 and HyTemp 4053EP) at the same rubber/plastic ratio (65/35) without any processing aid are shown below in Table 5. The TPV formulations are prepared in the laboratory batch mixer. The formulations and physical properties of the resulting PBT/ACM TPVs are shown below in Table 5.

**Table 5. Formulations in Weight% for PBT/ACM TPVs Made on Laboratory Mixer Without Using Any Processing Aid.**

| | **Thermoplastic Vulcanizate (TPV) Formulation** | |
|---|---|---|
| **Formulation No.** | **14** | **15** |
| Valox 315 | 33.02 | 33.02 |
| HyTemp 4065 | 61.32 | - |
| HyTemp 4053EP | - | 61.32 |
| PBO | 3.77 | 3.77 |
| Antioxidant 405 | 1.89 | 1.89 |
| **Property** | | |
| Injection Molded: Compression Set @150°C, 70 hr (%) | 104.93 | 79.92 |
| Hardness, Instantaneous (Shore A) | 82.40 | 75.10 |
| Hardness, Instantaneous (Shore D) | 27.90 | 24.70 |

### Example 6

TPV formulations using 1,3-PBO (curative) compounded using Ultramid B33 01 (Nylon 6) and two different grades of ACM (HyTemp 4065 and HyTemp 4053EP) at the same rubber/plastic ratio (65/35) without any processing aid are shown below in Table 6. The TPV formulations are prepared in the laboratory batch mixer. The formulations and physical properties of the resulting Nylon 6/ACM TPVs are shown below in Table 6.

**Table 6. Formulations in Weight% for Nylon 6/ACM TPVs Made on Laboratory Mixer Without Using Any Processing Aid.**

| | **Thermoplastic Vulcanizate (TPV) Formulation** | |
|---|---|---|
| **Formulation No.** | **16** | **17** |
| Ultramid B33 01 | 33.02 | 33.02 |
| HyTemp 4065 | 61.32 | - |
| HyTemp 4053EP | - | 61.32 |
| PBO | 3.77 | 3.77 |
| Antioxidant 405 | 1.89 | 1.89 |
| **Property** | | |
| Injection Molded: Compression Set @150°C, 70 hr (%) | 98.91 | 92.89 |
| Hardness, Instantaneous (Shore A) | 90.40 | 88.80 |
| Hardness, Instantaneous (Shore D) | 44.30 | 38.20 |

### Example 7

Unplasticized TPV formulations compounded using Ultramid B33 01 (Nylon 6) and Vamac Ultra HT (AEM) at the same rubber/plastic ratio (5/95) and different curative (1,3-PBO) levels and without any processing aid are shown below in Table 7. The TPV formulations are prepared in the twin-screw extruder. The properties of these formulations and the processing conditions used to produce them are also presented in Table 7.

**Table 7. Formulations in Weight% for Ultramid B33 01 /Vamac Ultra HT TPVs Without Using Any Processing Aid.**

| | **Thermoplastic Vulcanizate (TPV) formulation** | |
|---|---|---|
| **Formulation No.** | **18** | **19** |
| Ultramid B33 01 | 92.91 | 90.91 |
| PBO | 1.47 | 2.87 |
| Vamac Ultra HT | 4.89 | 4.78 |
| Antioxidant 405 | 0.73 | 1.44 |
| **Property** | | |
| Tape Extruded: Tensile Strength @ RT (MPa) | 6.16 | 6.30 |
| Tape Extruded: Elongation @ RT (%) | 122.50 | 70.8 |
| Injection Molded: Tensile Strength @ RT (MPa) | 51.12 | 50.83 |
| Injection Molded: Elongation @ RT (%) | 143.2 | 173.4 |
| Injection Molded: Tensile Strength @ 150°C (MPa) | 40.10 | 39.71 |
| Injection Molded: Elongation @ 150°C (%) | 283.50 | 293.70 |
| Injection Molded: Flexural Modulus @ RT (MPa) | 1839.30 | 1719.21 |
| Injection Molded: Compression Set @150°C, 70 hr (%) | 102.04 | 100.41 |
| Hardness, Instantaneous (Shore A) | 85.40 | 85.10 |
| Hardness, Instantaneous (Shore D) | 70.10 | 69.60 |

| **Twin-Screw Processing Conditions** | | |
|---|---|---|
| Screw Speed Range (RPM) | 100-300 | 100-300 |
| Feed rate Range (Ib/hr) | 15-50 | 15-50 |
| Average Torque (%) | 81 | 75 |

### Example 8

Unplasticized TPV formulations compounded using Valox 315 (Poly(butylene terephthalate) and Vamac Ultra HT (AEM) at different rubber/plastic ratios (10/90 and 5/95) using 1,3-PBO (curative) and without any processing aid are shown below in Table 8. The TPV formulations are prepared in the twin-screw extruder. The properties of these formulations and the processing conditions used to produce them are also presented in Table 8.

**Table 8. Formulations in Weight% for Valox 315 /Vamac Ultra HT TPVs Without Using Any Processing Aid.**

| | **Thermoplastic Vulcanizate (TPV) formulation** | |
|---|---|---|
| **Formulation No.** | **20** | **21** |
| Valox 315 | 88.02 | 92.91 |
| PBO | 1.47 | 1.47 |
| Vamac Ultra HT | 9.78 | 4.89 |
| Antioxidant 405 | 0.73 | 0.73 |
| **Property** | | |
| Tape Extruded: Tensile Strength @ RT (MPa) | 14.19 | 16.19 |
| Tape Extruded: Elongation @ RT (%) | 303.50 | 335.90 |
| Injection Molded: Tensile Strength @ RT (MPa) | 33.20 | 33.00 |
| Injection Molded: Elongation @ RT (%) | 238.20 | 115.80 |
| Injection Molded: Tensile Strength @ 150°C (MPa) | 24.85 | 26.62 |
| Injection Molded: Elongation @ 150°C (%) | 339.60 | 336.10 |
| Injection Molded: Flexural Modulus @ RT (MPa) | 1480.13 | 1699.59 |
| Injection Molded: Compression Set @150°C, 70 hr (%) | 93.11 | 87.14 |
| Hardness, Instantaneous (Shore A) | 89.80 | 89.30 |
| Hardness, Instantaneous (Shore D) | 69.00 | 70.50 |
| **Twin-Screw Processing Conditions** | | |
| Screw Speed Range (RPM) | 100-300 | 100-300 |
| Feed rate Range (Ib/hr) | 15-50 | 15-50 |
| Average Torque (%) | 86 | 94 |

### Example 9

Plasticized TPV formulations compounded using Ultramid B33 01 (Nylon 6) and Vamac Ultra HT (AEM) at the different rubber/plastic ratios and different curative (1,3-PBO) levels and without any processing aid are shown below in Table 9. The TPV formulations are prepared in the twin-screw extruder. The properties of these formulations and the processing conditions used to produce them are also presented in Table 9.

**Table 9. Formulations in Weight% for Ultramid B33 01 /Vamac Ultra HT TPVs Without Using Any Processing Aid.**

| | **Thermoplastic Vulcanizate (TPV) formulation** | | | |
|---|---|---|---|---|
| **Formulation No.** | **22** | **23** | **24** | **25** |
| Ultramid B33 01 | 34.09 | 38.10 | 45.36 | 54.05 |
| PBO | 5.14 | 3.49 | 4.10 | 2.70 |
| Vamac Ultra HT | 51.37 | 46.56 | 41.04 | 36.04 |
| BBSA | 9.40 | 11.85 | 9.5 | 7.21 |
| **Property** | | | | |
| Injection Molded: Tensile Strength @ RT (MPa) | 23.96 | 25.74 | 31.50 | 36.96 |
| Injection Molded: Elongation @ RT (%) | 90.40 | 89.20 | 110.70 | 97.10 |
| Injection Molded: Tensile Strength @ 150°C (MPa) | 7.79 | 9.53 | 13.53 | 18.72 |
| Injection Molded: Elongation @ 150°C (%) | 69.00 | 78.8 | 145.80 | 178.60 |
| Injection Molded: Flexural Modulus @ RT (MPa) | 327.50 | 318.90 | 505.91 | 668.63 |
| Injection Molded: Compression Set @150°C, 70 hr (%) | 105.32 | 99.80 | 96.06 | 95.17 |
| Hardness, Instantaneous (Shore A) | | | | |
| Hardness, Instantaneous (Shore D) | | | | |
| **Twin-Screw Processing Conditions** | | | | |
| Screw Speed Range (RPM) | 100-300 | 100-300 | 100-300 | 100-300 |
| Feed rate Range (Ib/hr) | 30-75 | 30-75 | 30-75 | 30-75 |
| Average Torque (%) | 69 | 69 | 78 | 87 |

Having described the thermoplastic vulcanizates and methods for preparing the thermoplastic vulcanizates in detail and by reference to specific examples thereof, it will be apparent that modifications and variations are possible without departing from the scope of what is defined in the appended claims. More specifically, although some aspects of the present disclosure are identified herein as particularly advantageous, it is contemplated that the present disclosure is not necessarily limited to these particular aspects of the disclosure.

Itemized list of embodiments:
1. A thermoplastic vulcanizate comprising a blend of
   (a) a plastic phase comprising from about 40 parts to about 95 parts, based on 100 parts of total rubber and plastic, of a plastic having a melting point of from about 160°C to about 260°C and which is a semi-crystalline engineering polyester or a semi-crystalline copolyester elastomer;
   (b) a rubber phase comprising from about 60 parts to about 5 parts, based on 100 parts of total rubber and plastic, of a rubber which is a carboxylic acid cure site and/or chlorine cure site functional acrylate rubber, an anhydride cure site functional acrylate rubber, or a carboxylic acid cure site or anhydride cure site functional ethylene-acrylate rubber; and
   (c) a plasticizer for one or both of the plastic or the rubber;
   wherein crosslinks exist between reactive groups in the rubber.
2. A thermoplastic vulcanizate according to embodiment 1, where the crosslinks are the result of a reaction between 1 part to about 15 parts, based on 100 parts of total rubber and plastic, of an addition type curing agent and reactive groups in the rubber.
3. A thermoplastic vulcanizate prepared by dynamically crosslinking a melt blend with an addition type curing agent, wherein the melt blend comprises:
   (a) a plastic phase comprising from about 40 parts to about 95 parts, based on 100 parts of total rubber and plastic, of a plastic having a melting point of from about 160°C to about 260°C and which is a semi-crystalline engineering polyester or a semi-crystalline copolyester elastomer;
   (b) a rubber phase comprising from about 60 parts to about 5 parts, based on 100 parts of total rubber and plastic, of a rubber which is a carboxylic acid cure site and/or chlorine cure site functional acrylate rubber, an anhydride cure site functional acrylate rubber, or a carboxylic acid cure site or anhydride cure site functional ethylene-acrylate rubber; and
   (c) a plasticizer for one or both of the plastic or the rubber; and
   wherein the amount of the addition type curing agent is from about 1 part to about 15 parts, based on 100 parts of total rubber and plastic.
4. A thermoplastic vulcanizate according to any of embodiments 2 and 3, wherein the addition type curing agent is an oxazoline curative selected from 2,2'-(1,3-phenylene)-bis-(2-oxazoline), 2,2'-(2,6-pyridylene)-bis-(2-oxazoline), 2,2'-(1,4-phenylene)-bis-(2-oxazoline), and mixtures thereof.
5. A thermoplastic vulcanizate according to any of embodiments 1-4, wherein the amount of plasticizer is from about 4 parts to about 35 parts, based on 100 parts of total rubber and plastic.
6. A thermoplastic vulcanizate according to any one of embodiments 1-5, where the engineering polyester is poly (butylene terephthalate), poly (trimethylene terephthalate), poly (ethylene terephthalate), a copolymer thereof, or a mixture thereof.
7. A thermoplastic vulcanizate according any one of embodiments 1-6 wherein the copolyester elastomer has hardness from about Shore D 70 to about Shore D 85, the crystalline segments are based on poly (butylene terephthalate), and the elastomeric segments are based on poly tetramethylene diol, poly trimethylene diol, or poly ethylene diol.
8. A thermoplastic vulcanizate according to embodiment 6, wherein the plasticizer is an ester terminated poly (1,3-butylene adipate) and the thermoplastic vulcanizate comprises from about 4 to 20 parts of the plasticizer based on 100 parts of total rubber and plastic.
9. A thermoplastic vulcanizate according to embodiment 7, wherein the plasticizer is a diester terminated poly ethylene glycol or monomeric ether ester or aliphatic polymeric ester or aromatic polymeric ester and the thermoplastic vulcanizate comprises from about 4 to about 35 parts of the plasticizer based on 100 parts of total rubber and plastic.
10. A thermoplastic vulcanizate according to any one of embodiments 1 to 9, wherein the ethylene-acrylate rubber consists of copolymerized ethylene and methyl acrylate, and the rubber has a carboxylic acid or maleic anhydride cure site content of from about 0.5 weight percent to about 5 weight percent.
11. A thermoplastic vulcanizate according to embodiment 10, wherein the rubber has a glass transition temperature between about -30°C and about -20°C.
12. A thermoplastic vulcanizate according to any one of embodiments 1 to 9, wherein the ethylene-acrylate rubber consists of copolymerized ethylene, methyl acrylate, and butyl acrylate, and the rubber has a carboxylic acid or maleic anhydride cure site content of from about 0.5 weight percent to about 5 weight percent.
13. A thermoplastic vulcanizate according to embodiment 12 wherein the rubber has a glass transition temperature between about -40⁰C and about -20°C.
14. A thermoplastic vulcanizate according to any one of embodiments 1 to 9, wherein the ethylene-acrylate rubber consists of copolymerized ethylene and one or more monomers selected from methyl acrylate, ethyl acrylate, butyl acrylate, methoxyethyl (meth)acrylate and methoxypoly(ethylene glycol) (meth)acrylate, and the rubber has a carboxylic acid or maleic anhydride cure site content of from about 0.5 weight percent to about 5 weight percent.
15. A thermoplastic vulcanizate according to any one of embodiments 1 to 9, wherein the acrylate rubber consists of poly (ethyl acrylate), or ethyl acrylate copolymerized with one or more of the following monomers: butyl acrylate, methoxyethyl (meth)acrylate, or methoxypoly(ethylene glycol) (meth)acrylate, and the rubber has an acrylic acid or methacrylic acid cure site content of from about 0.5 weight percent to about 5 weight percent.
16. A thermoplastic vulcanizate comprising a blend of
   (a) a plastic phase comprising from about 90 parts to about 95 parts, based on 100 parts of total rubber and plastic, of a plastic having a melting point of from about 160°C to about 260°C and which is a semi-crystalline engineering polyester or a semi-crystalline copolyester elastomer; and
   (b) a rubber phase comprising from about 10 parts to about 5 parts, based on 100 parts of total rubber and plastic, of a carboxylic acid cure site and/or chlorine cure site functional acrylate rubber, an anhydride cure site functional acrylate rubber, or a carboxylic acid cure site or anhydride cure site functional ethylene-acrylate rubber;
   wherein crosslinks exist between reactive groups in the rubber.
17. A thermoplastic vulcanizate according to embodiment 16, where the crosslinks are the result of a reaction between 1 part to about 15 parts, based on 100 parts of total rubber and plastic, of an addition type curing agent and reactive groups in the rubber.
18. A thermoplastic vulcanizate prepared by dynamically crosslinking a melt blend with an addition type curing agent, wherein the melt blend comprises:
   (a) a plastic phase comprising from about 90 parts to about 95 parts, based on 100 parts of total rubber and plastic, of a plastic having a melting point of from about 160°C to about 260°C and which is a semi-crystalline engineering polyester or a semi-crystalline copolyester elastomer; and
   (b) a rubber phase comprising from about 10 parts to about 5 parts, based on 100 parts of total rubber and plastic, of a carboxylic acid cure site and/or chlorine cure site functional acrylate rubber, an anhydride cure site functional acrylate rubber, or a carboxylic acid cure site or anhydride cure site functional ethylene-acrylate rubber; and
   the amount of the addition type curing agent is from about 1 part to about 15 parts, based on 100 parts of total rubber and plastic.
19. A thermoplastic vulcanizate according to embodiment 18, where the addition type curing agent is an oxazoline curative selected from 2,2'-(1,3-phenylene)-bis-(2-oxazoline), 2,2'-(2,6-pyridylene)-bis-(2-oxazoline), and 2,2'-(1,4-phenylene)-bis-(2-oxazoline).
20. A thermoplastic vulcanizate according to any one of embodiments 16-19, where the engineering polyester is poly (butylene terephthalate), poly (trimethylene terephthalate), poly (ethylene terephthalate), a copolymer thereof, or a mixture thereof.
21. A thermoplastic vulcanizate according to any one of embodiments 16-19, wherein the copolyester elastomer has a hardness of from about Shore D 70 to about Shore D 85, the crystalline segments are based on poly (butylene terephthalate), and the elastomeric segments are based on poly tetramethylene diol, poly trimethylene diol, or poly ethylene diol.
22. A thermoplastic vulcanizate according to any one of embodiments 16-19, where the ethylene-acrylate rubber consists of copolymerized ethylene and methyl acrylate, and the rubber has a carboxylic acid or maleic anhydride cure site content of from about 0.5 weight percent to about 5 weight percent.
23. A thermoplastic vulcanizate according embodiment 22 where the rubber glass transition temperature is between about -30⁰C to about -20⁰C.
24. A thermoplastic vulcanizate to any one of embodiments 16-19, where the ethylene-acrylate rubber consists of copolymerized ethylene, methyl acrylate, and butyl acrylate and has a carboxylic acid or maleic anhydride cure site content of from about 0.5 weight percent to about 5 weight percent.
25. A thermoplastic vulcanizate according embodiment 24 where the rubber glass transition temperature is between about -40°C to about -20°C.
26. A thermoplastic vulcanizate according to any one of embodiments 16-19, where the ethylene-acrylate rubber consists of copolymerized ethylene, and one or more monomers selected from methyl acrylate, ethyl acrylate, butyl acrylate, methoxyethyl (meth)acrylate and methoxy poly (ethylene glycol) (meth)acrylate, and the rubber has a carboxylic acid or maleic anhydride cure site content of from about 0.5 weight percent to about 5 weight percent.
27. A thermoplastic vulcanizate according embodiments 13 to 16, where the acrylate rubber consists of poly (ethyl acrylate), or ethyl acrylate copolymerized with one or more monomers selected from butyl acrylate, methoxyethyl (meth)acrylate, or methoxy poly (ethylene glycol) (meth)acrylate, and the rubber has an acrylic acid or methacrylic acid cure site content of from about 0.5 weight percent to about 5 weight percent.
28. A thermoplastic vulcanizate according to any one of embodiments 17-27, further comprising up to about 35 parts of a plasticizer, based on 100 parts of total rubber and plastic.
29. A thermoplastic vulcanizate comprising a blend of
   (a) a plastic phase comprising from about 35 parts to about 95 parts, based on 100 parts of total rubber and plastic, of a semi-crystalline polyamide having a melting point of from about 160°C to about 260°C; and
   (b) a rubber phase comprising from about 65 parts to about 5 parts, based on 100 parts of total rubber and plastic, of a carboxylic acid cure site and/or chlorine cure site functional acrylate rubber, an anhydride cure site functional acrylate rubber, or a carboxylic acid cure site or anhydride cure site functional ethylene-acrylate rubber;
   wherein crosslinks exist between reactive groups in the rubber.
30. A thermoplastic vulcanizate comprising a blend of
   (a) a plastic phase comprising from about 35 parts to about 95 parts, based on 100 parts of total rubber and plastic, of a semi-crystalline polyamide having a melting point of from about 160⁰C to about 260°C;
   (b) a rubber phase comprising from about 65 parts to about 5 parts, based on 100 parts of total rubber and plastic, of a carboxylic acid cure site and/or chlorine cure site functional acrylate rubber, an anhydride cure site functional acrylate rubber, or a carboxylic acid cure site or anhydride cure site functional ethylene-acrylate rubber; and
   (c) up to about 35 parts, based on 100 parts of total rubber and plastic in the formulation, of a plasticizer for one or both of the plastic or rubber;
   wherein crosslinks exist between reactive groups in the rubber.
31. A thermoplastic vulcanizate according to embodiment 29 or embodiment 30, where the crosslinks are the result of a reaction between 1 part to about 15 parts, based on 100 parts of total rubber and plastic, of an addition type curing agent and reactive groups in the rubber.
32. A thermoplastic vulcanizate prepared by dynamically crosslinking a melt blend with an addition type curing agent, wherein the melt blend comprises:
   (a) a plastic phase comprising from about 35 parts to about 95 parts, based on 100 parts of total rubber and plastic, of a semi-crystalline polyamide having a melting point of from about 160°C to about 260°C; and
   (b) a rubber phase comprising from about 65 parts to about 5 parts, based on 100 parts of total rubber and plastic, of a carboxylic acid cure site and/or chlorine cure site functional acrylate rubber, an anhydride cure site functional acrylate rubber, or a carboxylic acid cure site or anhydride cure site functional ethylene-acrylate rubber;
   wherein the amount of the addition type curing agent is from about 1 part to about 15 parts, based on 100 parts of total rubber and plastic.
33. A thermoplastic vulcanizate prepared by dynamically crosslinking a melt blend with an addition type curing agent, wherein the melt blend comprises:
   (a) a plastic phase comprising from about 35 parts to about 95 parts, based on 100 parts of total rubber and plastic, of a semi-crystalline polyamide having a melting point of from about 160°C to about 260°C;
   (b) a rubber phase comprising from about 65 parts to about 5 parts, based on 100 parts of total rubber and plastic, of a carboxylic acid cure site and/or chlorine cure site functional acrylate rubber, an anhydride cure site functional acrylate rubber, or a carboxylic acid cure site or anhydride cure site functional ethylene-acrylate rubber; and
   (c) up to about 35 parts, based on 100 parts of total rubber and plastic in the formulation, of a plasticizer for one or both of the plastic or the rubber; and
   wherein the amount of the addition type curing agent is from about 1 part to about 15 parts, based on 100 parts of total rubber and plastic.
34. A thermoplastic vulcanizate according to any of embodiments 29-33, wherein the addition type curing agent is an oxazoline curative selected 2,2'-(1,3-phenylene)-bis-(2-oxazoline), 2,2'-(2,6-pyridylene)-bis-(2-oxazoline), or 2,2'-(1,4-phenylene)-bis-(2-oxazoline).
35. A thermoplastic vulcanizate according to any one of embodiments 29-34, wherein the polyamide is a polycaprolactam, polylaurolactam, poly(11-aminoundecanoic acid), a polyamide derived from hexamethylenediamine and adipic acid, poly(hexamethylene adipamide-co-caprolactam, or a mixture thereof.
36. A thermoplastic vulcanizate according to embodiment 35, containing 4 to 35 parts, based on 100 parts of total rubber and plastic, N-(n-butyl) benzenesulfonamide, or from 4 to 35 parts of methyl 4-hydroxybenzoate as plasticizer, or mixtures thereof.
37. A thermoplastic vulcanizate according to any one of embodiments 29-36, wherein the ethylene-acrylate rubber consists of copolymerized ethylene and methyl acrylate, and the rubber has a carboxylic acid or maleic anhydride cure site content of from about 0.5 weight percent to about 5 weight percent.
38. A thermoplastic vulcanizate according embodiment 37 where the rubber glass transition temperature is from about -30°C to about -20°C.
39. A thermoplastic vulcanizate according to any one of embodiments 29-36, where the ethylene-acrylate rubber consists of copolymerized ethylene, methyl acrylate, and butyl acrylate, and the rubber has a carboxylic acid or maleic anhydride cure site content of from about 0.5 weight percent to about 5 weight percent.
40. A thermoplastic vulcanizate according embodiment 39 where the rubber glass transition temperature is from about -40°C to about -20°C.
41. A thermoplastic vulcanizate according to any one of embodiments 29-36, where the ethylene-acrylate rubber consists of copolymerized ethylene, and one or more monomers selected from methyl acrylate, ethyl acrylate, butyl acrylate, methoxyethyl (meth)acrylate and methoxypoly(ethylene glycol) (meth)acrylate, and the rubber has a carboxylic acid or maleic anhydride cure site content of from about 0.5 weight percent to about 5 weight percent.
42. A thermoplastic vulcanizate according to any one of embodiments 29-36, where the acrylate rubber consists of poly (ethyl acrylate), or ethyl acrylate copolymerized with one or more monomers selected from butyl acrylate, methoxyethyl (meth)acrylate, and methoxy poly (ethylene glycol) (meth)acrylate, and the rubber has an acrylic acid or methacrylic acid cure site content of from about 0.5 weight percent to about 5 weight percent.
43. A thermoplastic vulcanizate according any one of embodiments 1-42, further comprising a cure accelerator selected from tris(2,4-di-*t*-butylphenyl) phosphite, bis(2,4-di-*t*-butylphenyl) pentaerythritol diphosphite, and mixtures thereof.
44. A thermoplastic vulcanizate according to any one of embodiments 1-42 wherein greater than 90 weight per cent of the rubber is crosslinked.
45. A thermoplastic vulcanizate according to any one of embodiments 1-42 wherein greater than 90 weight percent of the rubber is not soluble in a solvent that readily dissolves the un-crosslinked rubber.
46. A process for producing a thermoplastic vulcanizate comprising mixing a composition comprising a plasticizer with plastic phase and a rubber phase and an addition type curing agent, wherein the mixing is carried out under conditions of shear and at a temperature above the melting point of the plastic phase, and wherein
   (a) the plastic phase comprises from about 40 parts to about 95 parts, based on 100 parts of total rubber and plastic, of a plastic having a melting point of from about 160°C to about 260°C and which is a semi-crystalline engineering polyester or a semi-crystalline copolyester elastomer; and
   (b) the rubber phase comprise from about 60 parts to about 5 parts, based on 100 parts of total rubber and plastic, of a rubber which is a carboxylic acid cure site and/or chlorine cure site functional acrylate rubber, an anhydride cure site functional acrylate rubber, or a carboxylic acid cure site or anhydride cure site functional ethylene-acrylate rubber.
47. A process for producing a thermoplastic vulcanizate comprising mixing a composition comprising a plastic phase, a rubber phase and an addition type curing agent, wherein the mixing is carried out under conditions of shear and at a temperature above the melting point of the plastic phase, and wherein
   (a) the plastic phase comprises from about 90 parts to about 95 parts, based on 100 parts of total rubber and plastic, of a plastic having a melting point of from about 160°C to about 260°C and which is a semi-crystalline engineering polyester or a semi-crystalline copolyester elastomer;
   (b) the rubber phase comprises from about 10 parts to about 5 parts, based on 100 parts of total rubber and plastic, of a carboxylic acid cure site and/or chlorine cure site functional acrylate rubber, an anhydride cure site functional acrylate rubber, or a carboxylic acid cure site or anhydride cure site functional ethylene-acrylate rubber;
48. A process for producing a thermoplastic vulcanizate comprising mixing a composition comprising a plastic phase, a rubber phase and an addition type curing agent, wherein the mixing is carried out under conditions of shear and at a temperature above the melting point of the plastic phase, and wherein
   (a) the plastic phase comprises from about 35 parts to about 95 parts, based on 100 parts of total rubber and plastic, of a semi-crystalline polyamide having a melting point of from about 160⁰C to about 260°C; and
   (b) the rubber phase comprises from about 65 parts to about 5 parts, based on 100 parts of total rubber and plastic, of a carboxylic acid cure site and/or chlorine cure site functional acrylate rubber, an anhydride cure site functional acrylate rubber, or a carboxylic acid cure site or anhydride cure site functional ethylene-acrylate rubber.
49. A process for producing a thermoplastic vulcanizate comprising mixing a composition comprising a plasticizer, a plastic phase, a rubber phase and an addition type curing agent, wherein the mixing is carried out under conditions of shear and at a temperature above the melting point of the plastic phase, and wherein
   (a) the plastic phase comprises from about 35 parts to about 95 parts, based on 100 parts of total rubber and plastic, of a semi-crystalline polyamide having a melting point of from about 160°C to about 260°C;
   (b) the rubber phase comprises from about 65 parts to about 5 parts, based on 100 parts of total rubber and plastic, of a carboxylic acid cure site and/or chlorine cure site functional acrylate rubber, an anhydride cure site functional acrylate rubber, or a carboxylic acid cure site or anhydride cure site functional ethylene-acrylate rubber; and
   (c) the mixture comprises up to about 35 parts, based on 100 parts of total rubber and plastic in the formulation, of the plasticizer.
50. A process according any one of embodiments 46-49, wherein the plastic and rubber phases are melt mixed and then the addition type curing agent is added.
51. A process according any one of embodiments 46-49, wherein the plastic and rubber phases are melt mixed while the addition type curing agent is added.
52. A process according any one of embodiments 46-49, wherein the plastic is melt mixed with the addition type curing agent to form a melt blend, and the melt blend of plastic and addition type curing agent is melt mixed with the rubber.
53. A process according any one of embodiments 52, wherein the melt blend of plastic and addition type curing agent is pelletized before melt blending with the rubber.
54. A process according embodiment 46 or embodiment 49, wherein the plasticizer is added prior to, or after the mixing is carried out under conditions of shear and at a temperature above the melting point of the plastic phase, or a portion added before mixing and a portion added after mixing.
55. A process according to any one of embodiments 46-54 where the maximum shear rate in the process is less than 10,000 s⁻¹.
56. A process according to any one of embodiments 46-55, wherein the composition further comprises a cure accelerator selected from tris(2,4-di-*t*-butylphenyl) phosphite, bis(2,4-di-*t-*butylphenyl) pentaerythritol diphosphite, and mixtures thereof.
57. An ethylene-acrylate rubber which is
   an ethylene-acrylate rubber consisting of copolymerized ethylene and methyl acrylate;
   an ethylene-acrylate rubber consisting of copolymerized ethylene, methyl acrylate, and butyl acrylate; or
   an ethylene-acrylate rubber consisting of copolymerized ethylene, and one or monomers selected from methyl acrylate, ethyl acrylate, butyl acrylate, methoxyethyl (meth)acrylate or methoxypoly(ethylene glycol) (meth)acrylate;
   wherein
   each rubber has a maleic anhydride cure site content of from about 0.5 weight percent to about 5 weight percent
58. An ethylene-acrylate rubber according to embodiment 57, wherein rubber is a copolymerized ethylene and methyl acrylate and has a rubber glass transition temperature of from about -30°C to about -20⁰C.
59. An ethylene-acrylate rubber according to embodiment 57, wherein rubber is a copolymerized ethylene, methyl acrylate, and butyl acrylate and has a rubber glass transition temperature of from about -40°C to about -20°C.
60. A thermoplastic elastomer comprising a plastic phase and a rubber phase, wherein
   (a) the plastic phase comprises from about 40 parts to about 95 parts, based on 100 parts of total rubber and plastic, of a plastic having a melting point of from about 1600C to about 2600C and which is a semi-crystalline engineering polyester or a semi-crystalline copolyester elastomer;
   (b) the rubber phase comprises from about 60 parts to about 5 parts, based on 100 parts of total rubber and plastic, of a rubber which is a carboxylic acid cure site and/or chlorine cure site functional acrylate rubber, an anhydride cure site functional acrylate rubber, or a carboxylic acid cure site or anhydride cure site functional ethylene-acrylate rubber; and
   (c) an optional plasticizer for one or both of the plastic or the rubber.
61. A thermoplastic elastomer according to embodiment 60, further comprising an addition-type curing agent.

## Claims

1. A thermoplastic vulcanizate comprising a blend of
(a) a plastic phase comprising from about 40 parts to about 95 parts, based on 100 parts of total rubber and plastic, of a plastic having a melting point of from about 160°C to about 260°C and which is a semi-crystalline engineering polyester or a semi-crystalline copolyester elastomer;
(b) a rubber phase comprising from about 60 parts to about 5 parts, based on 100 parts of total rubber and plastic, of a rubber which is a carboxylic acid cure site and/or chlorine cure site functional acrylate rubber, an anhydride cure site functional acrylate rubber, or a carboxylic acid cure site or anhydride cure site functional ethylene-acrylate rubber; and
(c) a plasticizer for one or both of the plastic or the rubber;
wherein crosslinks exist between reactive groups in the rubber.

2. A thermoplastic vulcanizate according to claim 1, where the crosslinks are the result of a reaction between 1 part to about 15 parts, based on 100 parts of total rubber and plastic, of an addition type curing agent and reactive groups in the rubber.

3. A thermoplastic vulcanizate according to claim 1 or claim 2, wherein the amount of plasticizer is from about 4 parts to about 35 parts, based on 100 parts of total rubber and plastic.

4. A thermoplastic vulcanizate according to any one of claim 1, where the plastic is an engineering polyester which is poly (butylene terephthalate), poly (trimethylene terephthalate), poly (ethylene terephthalate), a copolymer thereof, or a mixture thereof, or the plastic is a copolyester elastomer which has a hardness of from about Shore D 70 to about Shore D 85, and the crystalline segments are based on poly (butylene terephthalate), and the elastomeric segments are based on poly tetramethylene diol, poly trimethylene diol, or poly ethylene diol.

5. A thermoplastic vulcanizate according to any one of claims 1-4, wherein the plasticizer is an ester terminated poly (1,3-butylene adipate) and the thermoplastic vulcanizate comprises from about 4 to 20 parts of the plasticizer based on 100 parts of total rubber and plastic, or the plasticizer is a diester terminated poly ethylene glycol or monomeric ether ester or aliphatic polymeric ester or aromatic polymeric ester and the thermoplastic vulcanizate comprises from about 4 to about 35 parts of the plasticizer based on 100 parts of total rubber and plastic.

6. A thermoplastic vulcanizate according to any one of claims 1-5, wherein
the ethylene-acrylate rubber consists of copolymerized ethylene and one or more monomers selected from methyl acrylate, ethyl acrylate, butyl acrylate, methoxyethyl (meth)acrylate and methoxypoly(ethylene glycol) (meth)acrylate, and the rubber has a carboxylic acid or maleic anhydride cure site content of from about 0.5 weight percent to about 5 weight percent, and
the acrylate rubber consists of poly (ethyl acrylate), or ethyl acrylate copolymerized with one or more of the following monomers: butyl acrylate, methoxyethyl (meth)acrylate, or methoxypoly(ethylene glycol) (meth)acrylate, and the rubber has an acrylic acid or methacrylic acid cure site content of from about 0.5 weight percent to about 5 weight percent.

7. A thermoplastic vulcanizate according to claim 1 prepared by dynamically crosslinking a melt blend with an addition type curing agent, wherein the melt blend comprises:
(a) a plastic phase comprising from about 40 parts to about 95 parts, based on 100 parts of total rubber and plastic, of a plastic having a melting point of from about 160⁰C to about 260°C and which is a semi-crystalline engineering polyester or a semi-crystalline copolyester elastomer;
(b) a rubber phase comprising from about 60 parts to about 5 parts, based on 100 parts of total rubber and plastic, of a rubber which is a carboxylic acid cure site and/or chlorine cure site functional acrylate rubber, an anhydride cure site functional acrylate rubber, or a carboxylic acid cure site or anhydride cure site functional ethylene-acrylate rubber; and
(c) a plasticizer for one or both of the plastic or the rubber; and
wherein the amount of the addition type curing agent is from about 1 part to about 15 parts, based on 100 parts of total rubber and plastic.

8. A thermoplastic vulcanizate according to claim 1, wherein
(a) the plastic phase comprises from about 90 parts to about 95 parts, based on 100 parts of total rubber and plastic, of the plastic having a melting point of from about 160°C to about 260°C; and
(b) the rubber phase comprises from about 10 parts to about 5 parts, based on 100 parts of total rubber and plastic, of the carboxylic acid cure site and/or chlorine cure site functional acrylate rubber, anhydride cure site functional acrylate rubber, or the carboxylic acid cure site or anhydride cure site functional ethylene-acrylate rubber.

9. A thermoplastic vulcanizate comprising a blend of
(a) a plastic phase comprising from about 35 parts to about 95 parts, based on 100 parts of total rubber and plastic, of a semi-crystalline polyamide having a melting point of from about 160°C to about 260°C; and
(b) a rubber phase comprising from about 65 parts to about 5 parts, based on 100 parts of total rubber and plastic, of a carboxylic acid cure site and/or chlorine cure site functional acrylate rubber, an anhydride cure site functional acrylate rubber, or a carboxylic acid cure site or anhydride cure site functional ethylene-acrylate rubber;
wherein crosslinks exist between reactive groups in the rubber.

10. A thermoplastic vulcanizate according to claim 9, further comprising
(c) up to about 35 parts, based on 100 parts of total rubber and plastic in the formulation, of a plasticizer for one or both of the plastic or rubber.

11. A thermoplastic vulcanizate according to claim 9 or claim 10 prepared by dynamically crosslinking a melt blend with an addition type curing agent, wherein the melt blend comprises:
(a) a plastic phase comprising from about 35 parts to about 95 parts, based on 100 parts of total rubber and plastic, of a semi-crystalline polyamide having a melting point of from about 160°C to about 260°C; and
(b) a rubber phase comprising from about 65 parts to about 5 parts, based on 100 parts of total rubber and plastic, of a carboxylic acid cure site and/or chlorine cure site functional acrylate rubber, an anhydride cure site functional acrylate rubber, or a carboxylic acid cure site or anhydride cure site functional ethylene-acrylate rubber; and
(c) optionally up to about 35 parts, based on 100 parts of total rubber and plastic in the formulation, of a plasticizer for one or both of the plastic or the rubber; and
wherein the amount of the addition type curing agent is from about 1 part to about 15 parts, based on 100 parts of total rubber and plastic.

12. A process for producing a thermoplastic vulcanizate according to claim 1 comprising mixing a composition comprising a plasticizer with plastic phase and a rubber phase and an addition type curing agent, wherein the mixing is carried out under conditions of shear and at a temperature above the melting point of the plastic phase, and wherein
(c) the plastic phase comprises from about 40 parts to about 95 parts, based on 100 parts of total rubber and plastic, of a plastic having a melting point of from about 160°C to about 260°C and which is a semi-crystalline engineering polyester or a semi-crystalline copolyester elastomer; and
(d) the rubber phase comprise from about 60 parts to about 5 parts, based on 100 parts of total rubber and plastic, of a rubber which is a carboxylic acid cure site and/or chlorine cure site functional acrylate rubber, an anhydride cure site functional acrylate rubber, or a carboxylic acid cure site or anhydride cure site functional ethylene-acrylate rubber.

13. A process for producing a thermoplastic vulcanizate according to claim 9 or claim 10 comprising mixing a composition comprising a plastic phase, a rubber phase, an addition type curing agent, and an optional plasticizer, wherein the mixing is carried out under conditions of shear and at a temperature above the melting point of the plastic phase, and wherein
(a) the plastic phase comprises from about 35 parts to about 95 parts, based on 100 parts of total rubber and plastic, of a semi-crystalline polyamide having a melting point of from about 160°C to about 260°C;
(b) the rubber phase comprises from about 65 parts to about 5 parts, based on 100 parts of total rubber and plastic, of a carboxylic acid cure site and/or chlorine cure site functional acrylate rubber, an anhydride cure site functional acrylate rubber, or a carboxylic acid cure site or anhydride cure site functional ethylene-acrylate rubber; and
(c) the optional plasticizer is present in an amount of up to about 35 parts, based on 100 parts of total rubber and plastic in the formulation, and is a plasticizer for one or both of the plastic or the rubber.

14. A thermoplastic elastomer comprising a plastic phase and a rubber phase, wherein
(a) the plastic phase comprises from about 40 parts to about 95 parts, based on 100 parts of total rubber and plastic, of a plastic having a melting point of from about 1600C to about 2600C and which is a semi-crystalline engineering polyester or a semi-crystalline copolyester elastomer;
(b) the rubber phase comprises from about 60 parts to about 5 parts, based on 100 parts of total rubber and plastic, of a rubber which is a carboxylic acid cure site and/or chlorine cure site functional acrylate rubber, an anhydride cure site functional acrylate rubber, or a carboxylic acid cure site or anhydride cure site functional ethylene-acrylate rubber; and
(c) an optional plasticizer for one or both of the plastic or the rubber.
